# EUROPEAN PATENT SPECIFICATION

(11) **EP 2 224 685 B1**
(45) Date of publication and mention of the grant of the patent: **29.06.2011**
(21) Application number: 09154037.7
(22) Date of filing: 27.02.2009
(51) Int. Cl.: H04L 29/08, H04W 4/06, H04M 3/487, G06Q 30/00

(54) **Subsidized mobile device usage**
Subventionierte Verwendung eines tragbaren Geräts
Utilisation de dispositif mobile subventionné

(43) Date of publication of application: 01.09.2010
(73) Proprietor: RESEARCH IN MOTION LIMITED, Waterloo, Ontario N2L 3W8 (CA)
(72) Inventor: Bosan, Sorel, Waterloo Ontario N2L 3L3 (CA); Zima, Janice, Waterloo Ontario N2L 3L3 (CA)
(74) Representative: Patel, Binesh

(56) References cited:
- WO-A-2008/048738
- US-A1- 2002 046 104
- US-A1- 2005 080 665
- US-A1- 2007 088 821

## Description

### Field

The present disclosure relates generally to a mobile device usage in a communication network and more particularly to providing a benefit such as a subsidy for such usage.

### Background

Wireless mobile devices including mobile phones, PDAs, appliances, portable computers, etc. can be configured for voice, data or combined voice and data communications capabilities and are commonly used for personal and business communications. Wireless network service providers, seller agents, etc. offer wireless services for voice, data or voice and data communications to a subscribing user in accordance with a plan (i.e. a contract) having applicable fees. Sometimes wireless services are provided to groups of users in accordance with a group plan or contract. For example, a family plan may provide a plurality of family members with network services for their mobile devices. Business or other entities may also negotiate group plans for their respective users.

Network infrastructure may be configured to control the services provided to mobile devices. For example, a wireless server may be configured to provide administrative and management services dealing with policies, such as those specifying allowed applications for users, services available to applications and more. A particular business may operate the wireless server in an enterprise context, providing such services on behalf of one or more groups of its business users. A wireless server may be provided in a home context to a family group of users.

United States patent application 09/851,909, entitled "Method and Apparatus for Generating Targeted Impressions to Internet Clients," describes using a server to facilitate a transaction between a subscriber and a provider for a right to advertise to the subscriber. The server is configured to have access to a profile database storing a set of information regarding the subscribers. When a subscriber accesses a webpage that subscriber's profile is sent to a number of advertisers and advertiser networks who in turn bid for the right to advertise to that subscriber. Whether and how to advertise is based on the determination of the advertisers and advertiser networks.

An example of a patent application directed at network advertising is international publication number WO 2008/048738 A1, entitled "Distribution and Display of Advertising for Devices in a Network." This application describes enabling a service provider or network operator to control the policy used to specify the selection, timing, and display of an advertisement stored in a cache of a client device. A modification to the policy can be broadcast and implemented in real-time by the device.

An example of a patent application directed to context-sensitive advertising is United States patent application 10/647,411, entitled "Context Sensitive Advertisement Delivery Framework," and which discloses determining the identification, state and location of a mobile device and updating this information in a profile database using a location-based context engine. Advertisements are then selected based on the profile database information and are sent to the mobile device.

United States patent application 11/563,329, entitled "Target information Generation and Ad Server," discloses an advertisement selection and delivery system for selecting advertisements based on profile information and rendering the advertisements as accessible to a user operating a network-capable appliance connected to a data-packet-network.

### Summary

Apparatus and methods for wireless systems provide advertisements to mobile wireless devices to receive a benefit (e.g. service subsidization). In an embodiment, a wireless server manages the operation of a group of mobile wireless devices sharing a least one common criterion to provide wireless services of at least one network provider. At least one policy is maintained by the server for managing the operations. Administration parameters for a advertisement policy are configured for determining whether to provide an advertisement to a respective one of the group of mobile wireless devices to obtain the benefit. Usage of the wireless services is monitored and advertisements provided, in response to the monitoring and the policy, by the server to the group for presentation to respective users. A signal may be generated to advise the benefit provider of the provision of an advertisement. A mobile wireless device is provided for presenting the advertisements.

In one aspect there is provided a computer implemented method of managing usage of wireless services by a group of mobile wireless devices sharing a least one common criterion to provide wireless services of at least one network provider. The computer implemented method comprises: monitoring the usage of wireless services by the group of mobile wireless devices for generating and maintaining information representing a measure of the usage; maintaining at least one policy for managing the usage, said at least one policy comprising administration parameters configured for determining whether to provide an advertisement to a respective one of the group of mobile wireless devices responsive to the measure of usage; and providing advertisements to the group of mobile wireless devices for presentation to respective users in accordance with the administration parameters thereby to obtain a benefit subsidizing the usage of wireless services.

The method may comprise generating a signal to advise a provider of the benefit of the provision of an advertisement. The method may comprise receiving advertisements for providing to said mobile wireless devices.

The at least one policy may define a plurality of classes for said mobile wireless devices to provide different levels of wireless services to groups of said mobile wireless devices and the administration parameters may provide advertisements in accordance the classes of wireless services. In one embodiment, the method may comprise periodically reviewing said information and automatically assigning a particular mobile wireless device to a particular one of said plurality of classes in response to the reviewing thereby to manage said usage of wireless services. In one embodiment the method may comprise suspending the wireless services provided to a mobile wireless device in response to said reviewing.

The method may comprise providing a user interface for defining the at least one policy and administration parameters for particular mobile wireless devices.

At least some of the group of mobile wireless devices may share a group plan of service from a network provider and the advertisement policy may be correlated to the group plan of service. The benefit may be determined in accordance with the group plan of service. The benefit may comprise a subsidization for the usage of the services of a particular network provider.

Providing advertisements may be further responsive to respective requests for wireless services.

In another aspect there is provided a computer-readable medium that stores instructions, which, when performed by a computer, cause the computer to perform a method in accordance with the method aspect.

In another aspect, a wireless server comprises: a router to communicate with a plurality of mobile wireless clients; a processor and memory storing instructions, which, when performed by the processor, cause the processor to perform a method in accordance with the method aspect.

In yet a further aspect, a mobile wireless device is provided that comprises: a controller and memory coupled thereto, said memory storing instructions for configuring the controller to: receive at least one policy for controlling the operation of the mobile wireless device with at least one wireless server managing the operation of a group of mobile wireless devices sharing a least one common criterion to provide wireless services of at least one network provider, said server monitoring the usage of wireless services by the group of mobile wireless devices to provide advertisements responsive to said monitoring, said at least one policy comprising configuration data for presenting advertisements in response to at least some requests to the at least one wireless server for wireless services; request a wireless service from a respective one of the at least one wireless server; receive an advertisement from the respective one of the at least one wireless server; and present the advertisement via at least one output of the mobile wireless device.

The mobile wireless device may receive services from a particular network provider in accordance with a group plan of service and wherein the receiving of an advertisement is correlated with conditions of the group plan of service.

### Brief Description of the Drawings

Embodiments are illustrated by way of example and not limitation in the figures of the accompanying drawings in which:

Figure 1 illustrates features of an embodiment of an architecture for operation of wireless entities to transfer informational content using wireless infrastructure.

Figure 2A illustrates features of an embodiment of an architecture for a wireless system including a wireless server.

Figure 2B depicts an embodiment of a wireless architecture in which a relationship between mobile wireless clients and multiple wireless servers is illustrated.

Figure 3 illustrates features of an embodiment of a mobile wireless client associated with multiple wireless servers in a share group arrangement.

Figure 4A shows an embodiment of a method of administering mobile wireless clients, a wireless server or both.

Figure 4B shows an alternate embodiment of a method of administering mobile wireless clients, a wireless server or both.

Figures 5A, 5B, 5C and 5D illustrate an embodiment of a method of controlling usage of at least one mobile wireless device.

Figure 6 illustrates an embodiment of a method of presenting an advertisement to subsidize usage of a mobile wireless device.

### Detailed Description

The following detailed description refers to the accompanying drawings that show, by way of illustration, details and embodiments in which the present disclosure may be practiced. Other embodiments may be utilized and structural, logical, and electrical changes may be made. The various embodiments disclosed herein are not necessarily mutually exclusive, as some embodiments can be combined with one or more other embodiments to form new embodiments.

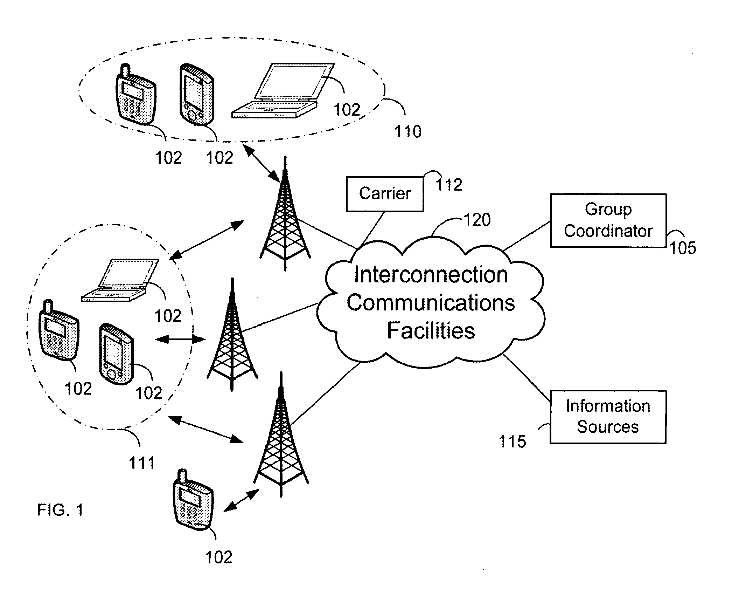

Figure 1 illustrates an exemplary embodiment of an architecture for operation of wireless entities to transfer informational content using wireless infrastructure. The example architecture includes a group coordinator 105 that provides a variety of services to one or more groups 110, 111 of mobile wireless devices 102. As further described herein, usage of wireless infrastructure by the groups 110, 111 of mobile wireless devices may be subsidized through the provision of advertisements by group coordinator 105 .

The mobile wireless devices 102 may include, but are not limited to, mobile telephones, portable computers, personal digital assistants (PDAs), and other devices that may be conveniently carried by a user and provide wireless communication. Mobile telephones include wireless communication devices that have generally been referred to as cell phones. Mobile telephones may include a wide range of communication devices from portable phones with limited functionality beyond voice communication to portable phones capable of providing the functionality of a personal computer. A personal computer (PC) herein refers to computing devices having an operating system (OS) such that use of the personal computer may be conducted by individuals having little or no knowledge of the basics of the underlying hardware and software that operate the PC and whose operation may be conducted without individuals typically authoring computer programs to operate the computer. Portable computers may include portable personal computers (PC)s. An example of a portable PC is a laptop computer or notebook computer that typically has a display screen, keyboard, underlying hardware and software, and a display pointing device that are all integrated in a housing that can easily be carried by an individual. Some PDAs may be viewed as a type of portable computer.

Group coordinator 105 includes instrumentality to manage the operation of one or more groups 110, 111 of mobile wireless devices under a common criterion or a common set of criteria. Group coordinator 105 controls dissemination of information among the devices 102 in the one or more groups 110, 111. In some instances, the information may be shared between one or more of the mobile wireless devices 102 in a group (e.g.110). In some instances, the information may be shared to less than all the mobile wireless devices 102 in group 110. A privacy status may be used to maintain and regulate the privacy of the information relative to both members of the groups 110, 111 and entities external to respective groups 110, 111. The instrumentality can be realized in hardware implementations, software implementations, and combinations of hardware and software implementations. Some portions of the instrumentalities may be described in terms of algorithms and symbolic representations of operations on data bits within a machine memory.

Group Coordinator 105 may access information sources 115 using interconnection communication facilities 120. Information sources 115 may include a wide variety of sources that provide informational content in various formats. Information sources 115 may include informational content in an open format without restrictions on what entities may access the informational content. Information sources 115 may include informational content in an open format requiring registration by the entities to the informational content without further restrictions. Information sources 115 may include informational content accessible based on a subscription to the informational content. Information sources 115 may include informational content accessible under a privacy condition administered by the corresponding information sources 115.

Informational content may include, but is not limited to, photographs, documents, music, video, audio transmissions, e-mail, messages, telephonic communications, personalized data, computational data, operational data, and combinations thereof. Personalized data may include, but is not limited to, an individual's personal calendar entries, notes, contacts (names, addresses, phone numbers, e-mail address, etc.), memos, and other data personal to an individual. The informational content may be provided in a variety of electronic formats. Such electronic formats may include file formats having extensions that include, but are not limited to, doc, dot, wpd, txt, xls, pdf, ppt, jpg, jpeg, png, bmp, gif, html, htm, zip, tif, tiff, wmf, mp3, and wav.

By way of example, informational content may comprise an advertisement to be presented by a mobile wireless device. The presentation may be in exchange for a benefit. A benefit may comprise a subsidization of charges for the usage of services via the wireless infrastructure. In an embodiment, at least some of the mobile devices 102 in groups 110, 111 receive wireless services managed by wireless server group coordinator 105 do so in accordance with a group plan from a particular wireless service network provider (e.g. a carrier 112). The wireless services are provided at least partially under the control of the carrier 112. A group plan may specify pricing and other particulars for communication using the wireless infrastructure, such as voice and data traffic. Voice traffic is typically priced and counted in units of time whereas data traffic is priced and counted in units of data (e.g. bytes). Traffic may be priced on a per mobile device basis or sometimes shared among the group. For example, in a family plan context, the plan may allow a family to use X bytes of data traffic or Y seconds of voice traffic in total for a particular period such as a month. The plan may specify conditions for subsidizing usage through the provision of advertisements. Thus the provision of the advertisements may be correlated to the group plan. In another embodiment, the provision of advertisements may be correlated to other benefit plans from benefit providers such as a carrier or another entity.

To provide a benefit, such as a usage subsidy, to at least some of the mobile wireless devices 102 of the groups 110 ,111, group coordinator 105 may communicate with one or more informational sources 115 for advertisements to be provided to selected mobile wireless devices 102 of groups 110, 111. Group operator 105 may communicate with the benefit provider (e.g. carrier 112) to advise that advertisements have been provided, for example, to indicate which communications are subsidized.

Interconnection communications facilities 120 may include one or more communication networks that allow transfer of data among group coordinator 105, groups of mobile wireless devices, information sources 115, and other communication entities accessible in conjunction with interconnection communications facilities 120. Interconnection communications facilities 120 may be configured as a local area network, a wide area network, or combinations thereof. In addition, interconnection communications facilities 120 may be configured to include a private network. Interconnection communications facilities 120 may be realized using one or more transmission media. In an embodiment, group coordinator 105 and members of the group 110, 111 of wireless devices may communicate directly without using interconnection communication facilities 120. Interconnection communications facilities 120 allow communication between group coordinator 105 and members of group 110, 111 in a wireless infrastructure that includes mobile wireless devices that do not share a common criterion or a common set of criteria with the group coordinator 105 and members of group 110, 111 but use the same wireless infrastructure or at least portions of the same wireless infrastructure.

In an embodiment, group coordinator 105 and groups 110, 111 of mobile wireless devices 102 have an intrinsic relationship such that group coordinator 105 operates in large part based on the intrinsic relationship with the respective group. The intrinsic relationship may be used to define a share group. A share group generally includes two or more entities that share information in which the entities have a trusted relationship. The trusted relationship may be directed to and held by one of the entities of the group. Group coordinator 105 may be realized as software for integration into a machine that provides simplified operation of the machine around the core of group 110. Group 110 or 111 may be defined by a set of people having a common relationship implementable in group coordinator 105. By way of example, the common relationship among the set of people may comprise a familial relationship, such as among members of the same household or an extended household. By way of another example, the common relationship may be an association with a common enterprise or other organization, such as a work or business association. The set of people may range from one to thousands. For group 110 or 111 of mobile wireless devices, the intrinsic relationship may be generated by a common use of group coordinator 105 in which group coordinator 105 shares information among the members of group based on a unique identifier of a user group 110 or 111 being a user of group coordinator 105. The relationship may be initiated by installing unique identifiers of each member in a storage medium of group coordinator 105 to create a share group. Groups 110 and 111 may share a common relationship but be grouped according to a distinguishing characteristic such as a class of service to be received as described herein below.

In an embodiment, communications between a mobile wireless device of group 110 111 and group coordinator 105 may be conducted over a secure communication channel. The secure communication channel may be correlated to the unique identification that establishes the group relationship of the wireless mobile device to the share group of group coordinator 105. In some embodiments, group coordinator 105 may be realized as group software installable on an existing machine having a controller, such as one or more processors, and machine-readable medium to store the instructions of the group software. In some embodiments, group coordinator 105 may be realized as a system having hardware and software to execute the functions for the share group defined by group coordinator 105 and group 110, 111 of mobile wireless devices. In various embodiments, a simplified user interface (UI) may be provided to execute and operate the group software of group coordinator 105.

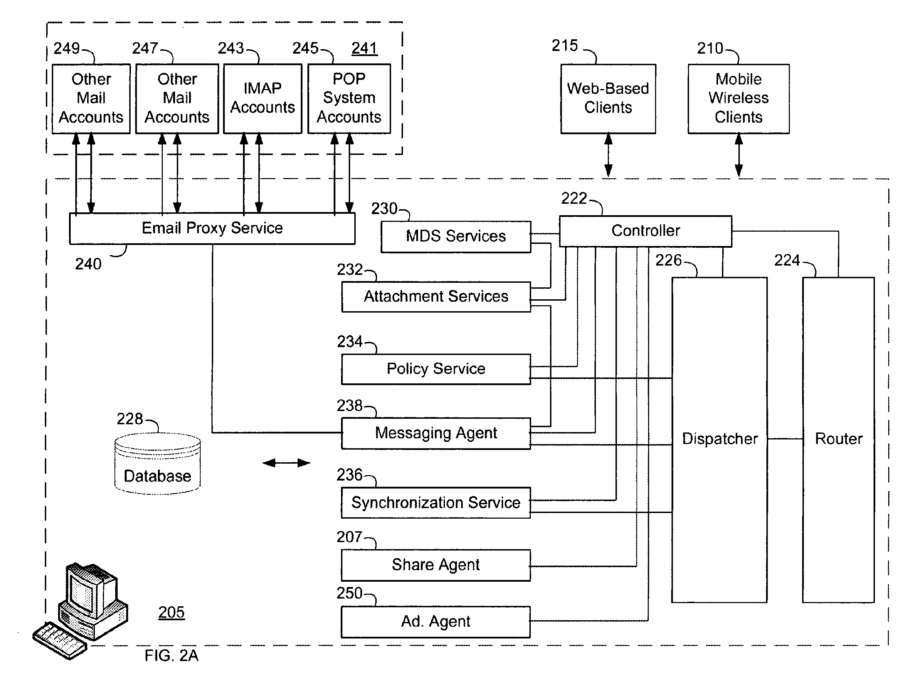

Figure 2A illustrates features of an embodiment of an architecture for a wireless system including a wireless server 205. A wireless server generally comprises a server configuration that communicates with an entity over a channel established by the entities in a wireless network. Multiple wireless servers may be located at various nodes in a wireless network. Multiple wireless servers may be located at a single node in a communications network. A wireless server may be used to implement services from a network provider. A network provider provides a user with access to a communication network and typically provides access to information services associated with the provided access to a communication network. Wireless server 205 may be associated with multiple network providers dependent upon the network provider services to which the registered users of wireless server 205 have entered agreements. Wireless server 205 may be in a client-server relationship with a variety of systems and devices, including mobile wireless clients 210 and web-based clients 215. Wireless server 205 can be arranged as a group coordinator 105 with respect to mobile wireless clients 210. In an embodiment, wireless server 205 serves as a staging area for the dissemination of informational content to one or more mobile wireless clients of a share group of wireless server 205. Wireless server 205 may communicate with the mobile wireless clients over a wireless channel that is secured. The secure channel may be provided using encrypted data for security. In an embodiment, the data may be encrypted using the advanced encryption standard (AES).

In various embodiments, wireless server 205 may be configured as a set of inter-operative instructions that when processed using a controller, such as a processor, cause performance of functions correlated to interaction within one or more of the wireless clients 210 and/or one or more of the web-based clients 215. Wireless server 205 may have one or more functional sections such as a controller 222, a router 224, a dispatcher 226, a database 228, a mobile data system (MDS) 230, an attachment service 232, a policy service 234, a synchronization service 236, a messaging agent 238 and an e-mail proxy service 240. E-mail proxy service 240 provides a mechanism for wireless server 205 to access a group 241 of mail accounts external to wireless server 205. Group 241 includes two or more mail accounts such as an internet message access protocol (IMAP) mail account 243, a post office protocol (POP) system account 245, a Google™ mail account 247, or other mail accounts 249.

In an embodiment, wireless server 205 includes a share agent 207 configured to control dissemination of information from wireless server 205 to mobile wireless clients 210 or other entities on a shared basis responsive to a determination of a privacy state of the information. Share agent 207 may control one or more of database 228, mobile data system 230, attachment service 232, policy service 234, synchronization service 236, messaging agent 238, and e-mail proxy service 240. Share agent 207 may be distributed among mobile data system 230, attachment service 232, policy service 234, synchronization service 236, messaging agent 238, and e-mail proxy service 240 or structured within one of these wireless server instrumentalities.

Wireless server 205 and mobile wireless clients 210 may operate as a share group having secured communication and secured sharing by means of wireless server 205. Wireless server 205 includes a list of identifiers that uniquely identifies each of the mobile wireless clients 210 as belonging to a user that is also a user of wireless server 205. Establishing the unique identifiers in wireless server 205 and each corresponding mobile wireless clients 210 may define the trust relationship for the share group. The identities of each of the mobile wireless clients may be correlated to its secure remote password (SRP) key. The SRP key may be used for authentication when connecting to a wireless network. The SRP key provides a unique identifier for wireless server 205 and may also indicate usage of a secure channel. The SRP keys may be used for registering the wireless server 205 and determining that wireless server 205 has a unique relationship with a wireless client to communicate with a network infrastructure. SRP key also allows an identification of a wireless client with wireless server 205 over a direct plug-in channel or an unsecured Wi-Fi channel. A SRP key can be implemented in any acceptable manner depending on the security needs of the situation. The implementation may range from simple combinations, such as the current date and time, to the use of complex cryptographic algorithms. Simple implementations may be used in environments that are very benign with respect to security. When security concerns are high, complex cryptographic algorithms may be used. Various combinations of security measures may be implemented with the SRP key.

The share group may have several levels for a privacy state. The privacy state may include, but is not limited to, a status as being owned by one user associated with one of mobile wireless clients 210, a status as being shared among two or more of mobile wireless clients 210 but less than all the mobile wireless clients 210, a status as being shared among all of mobile wireless clients 210, and a status as being shared or accessible by entities outside the group of mobile wireless clients 210 in addition to being shared among all of mobile wireless clients 210. A status as being shared or accessible by entities outside the group of mobile wireless clients 210 may include specified entities permitted accessibility.

The share agent of wireless server 205 may be operable to make informational content available to mobile wireless clients 210. Such informational content may include one or more of audio, video, text, or combinations thereof. An agent is a software entity, which is a set of instructions executable by a machine, capable of acting with a certain degree of autonomy in order to accomplish tasks on behalf of its user machine. An agent is typically defined in terms of its behavior and may execute its function based on the criteria contained within its instruction set. Agent code typically runs continuously to perform one or more activities based on its instructions without being executed directly on demand. Capabilities associated with agents include, but are not limited to, task selection, prioritization, goal-directed behaviour, decision-making without human intervention, engagement of other components through a form of communication and coordination. Agents typically analyze the context of activity in which they operate and react to it appropriately. The share agent can activate and execute its functionality based on an occurrence of an event or a setting in wireless server 205. For example, reception of a specified type of data in wireless server 205 may initiate activity of the share agent to disseminate the data based on stored criteria. Another example includes the selection of a feature by a user of wireless server 205 that results in a change in setting that is one of the events to initiate activity by the share agent.

In an embodiment, wireless server 205 comprises an advertisement agent 250 configured to control dissemination of advertisements to mobile wireless clients 210 responsive to an advertisement policy for the mobile wireless clients 210. Advertisement agent 250 may control or otherwise interface with one or more of database 228, mobile data system 230, policy service 234, synchronization service 236, messaging agent 238, and share agent 207. Advertisement agent 250 may be distributed among mobile data system 230, attachment service 232, policy service 234, synchronization service 236, messaging agent 238, share agent 207 and e-mail proxy service 240 or structured within one of these wireless server instrumentalities.

Wireless server 205 may be realized in various configurations. Wireless server 205 may be configured in a hardware configuration including machine readable medium having machine-executable instructions to execute functions to communicatively operate wireless server 205 with mobile wireless clients 210. Such a hardware configuration may include an integrated structure arranged in a manner similar to a desktop computer. Other hardware configurations may be used for wireless server 205. Wireless server 205 may be configured as group software that may be installed on machine. In an embodiment, wireless server 205 is configured on a personal computer to wirelessly provide private information, information generated on the personal computer, and shared information to one or more of mobile wireless clients 210. A system incorporating wireless server 205 may operate as a group-oriented system having limited administration associated with the operation of wireless server 205. The system may include a user interface to administer wireless server 205 based on a set of administration parameters, where the set is managed by instruction-generated wizards and lists. A wizard is set of executed instructions that query a user for input to direct the user through steps to complete a task.

The various features of wireless server 205, some of which are illustrated in Figure 2A, may be realized in hardware, software, and/or combinations thereof. The features may be configured to run as agents for wireless server 205. In various embodiments, several features may be incorporated in a single agent to operate these features.

Controller 222 may be used to manage database 228, router 224, and dispatcher 226 and to regulate operation of MDS services 230, attachment services 232, policy service 234, messaging agent 238, synchronization service 236 and advertisement agent 250. Router 224 is used to route communications to an entity. Router 224 is operable to control communication to a mobile wireless client selected from the mobile wireless clients 210. Such communication may be provided in a format selected from an e-mail message, an instant messaging communication, a page message, a text communication, a telephonic call, or other format. Dispatcher 226 may be used to control the implementations of services on wireless server 205. Based on an acquired license to use wireless server 205 or particular services in wireless server 205, dispatcher 226 may synchronize access to the services based on a time period for the license and the time at which the license was acquired.

Information maintained, processed, and transferred may be stored in database 228. Database 228 may be configured as a distributed database within wireless server 205. Database 228 may be queried and operated using structured query language (SQL). Other query and store mechanisms may be implemented. Database 228 may include information stored in memory external to wireless server 205 that is accessible when applying SQL. Database 228 may include information associated with users of mobile wireless clients 205 including a user identification for each mobile wireless client. Each user identification may be correlated to a wireless service account of the user. Database 228 may be structured such that tables include a correspondence between informational content and folders associated with the content, a privacy status for the informational content, and a correspondence between the privacy status and authorized users of the content. The informational content may include, but is not limited to, calendar data, an address book, a message board, a task monitor, photograph data, music data, video data, text data, user settings, preferences, usage data, or combinations thereof.

MDS 230 may operate with share agent 207 to control dissemination of information from database 228 on a shared basis responsive to a determination of a privacy state of the information. The information may include content of one or more of an interactive calendar, an address book, a message board, a task monitor, or other informational content.

MDS 230 may include a resource agent configured to make informational content that is collected from sources external to the system available to mobile wireless clients 210. In an embodiment, MDS 230 may operate with a video agent configured to access a video programming source external to wireless server 205 and to make available video content from the video programming source to each of mobile wireless clients 210 that are authorized to access the video content. The video content may be routed through wireless server 205. Wireless server 205 may include a folder associated with the storage of the video content in memory accessible by wireless server 205. Alternatively, wireless server 205 may set up a path for direct transfer of the video content from the video programming source to each authorized mobile wireless clients 210. Wireless server 205 may include an interface to access the video programming source via a wired network, a fiber network, and a wireless network.

MDS 230 may coordinate retrieval and display of information content with attachment service 232. Attachment service 232 may manage a browser internal to wireless server 205 to browser media files stored on the wireless server. The browser may be controlled through a user interface incorporated in wireless server 205 or under direction of a browser in one of the mobile wireless clients 210. The browser can be used to select a media file by a user of the wireless server 205 or one of the mobile wireless clients 210. A transfer agent may used to send a selected media file to the mobile wireless client corresponding to the browse activity.

Policy service 234 may be configured as a flow control agent responsive to a communication policy to limit the flow of information with each of mobile wireless clients 210. Such an agent may be referred to as a server policy agent, SPA. The communication policy includes a set of rules to regulate use of voice communication services on the plurality of mobile wireless clients. The communication policies may also include operational instructions to regulate use of a network external to the system. For example, the communication policy may regulate the flow of information from each of mobile wireless clients 210 to entities on the Internet. Such communication policies may be arranged as a set of policies, where a policy in the set may be applied to one or more of the mobile wireless clients 210. The policies may regulate flow of e-mail messages, instant messaging communications, page messages, text communications, and/or telephonic calls.

Synchronization service 236 includes a sync engine to automatically copy information to each of mobile wireless clients 210 authorized to access the information. In an embodiment, the information can be automatically transferred upon the allocation of the information to a shared folder controlled by database 228. The shared folder may be categorization by its type of content and by the identification of entities that are allowed to access the content. The authorized entities may be one or more of mobile wireless clients 210 and may optionally include other authorized entities. In an embodiment, wireless server 205 is operable to automatically provide data, via synchronization service 236, to a wireless server external to the system upon the data being transferred to shared folder, where the identified shared folder is correlated to a user identification associated with at least one of mobile wireless clients 210. The data may include, but is not limited to personal calendar data, photograph data, music data, video data, text data, or combinations thereof.

Messaging agent 238 includes an e-mail agent to support e-mail services for mobile wireless clients 210 correlated to the user identifications. The e-mail services include coordinating the sending and receiving of e-mail from each e-mail domain corresponding to the user identifications. With wireless server 205 configuration in a group-oriented arrangement, all emails associated with mobile wireless clients 210 may be controlled using messaging agent 238. Operation of messaging agent 238 may be coordinated with e-mail proxy service 240 to collect e-mails from group 241 of mail domains external to the wireless server 205, where each collected e-mail has an addressee corresponding to a user identification that is one of the group users of wireless server 205. E-mails may be collected using protocols under which the host e-mail domains operate. Such protocols may be standard protocols or proprietary protocols. Proprietary protocols may be used by private e-mail domains. Messaging agent 238 and/or e-mail proxy 240 may be configured to route an e-mail message corresponding to one or more of mobile wireless clients without processing through e-mail domains identified in the e-mail message. After routing the e-mail to the corresponding mobile wireless clients, the e-mail message may be processed through the identified one or more e-mail domains. The processing may be logged such that activity from the e-mail domain regarding the pre-processed e-mail message can be ignored.

As noted, communication via mobile wireless clients 210 are facilitated through wireless server 205 in accordance with MDS service 230, policy service 234, messaging agent 238, synchronization service 236, etc. Such communications include communication via wireless infrastructure for which fees may be applicable in accordance with a group plan for wireless services for at least some of the mobile wireless clients 210. In an embodiment, wireless server 205 may provide advertisements to at least some of the mobile wireless clients 210. Advertisement agent 250 may be configured to provide the advertisements, for example, in accordance with one or more policies of the wireless server 205. The policies may apply to one or more of the mobile wireless clients 210. In an embodiment, advertisement agent 250 may monitor communication traffic, particularly communication traffic communicated under the associated plan for wireless services, between wireless server 205 and each of the at least some of the mobile wireless clients 210. Advertisement agent 250 of wireless server 205 may coordinate the provision of advertisements in accordance with the policies in response to the monitored traffic.

Advertisement agent 250 may be configure to make informational content, in the form of advertisements, that is collected from one or more informational sources 115 or other sources external to the system available to mobile wireless clients 210. For example, in accordance with the policy, advertisement agent may communicate the advertisement to at least some of the mobile wireless clients 210 for presentation to users thereof. In an embodiment, each mobile wireless client may be configured with an advertisement presentation agent configured to present the advertisement. The informational content may be routed through wireless server 205. Wireless server 205 may include a folder associated with the storage of the informational content in memory accessible by wireless server 205. Alternatively, wireless server 205 may set up a path for direct transfer of the informational content from the source to the authorized mobile wireless clients 210. As described further herein below, the advertisement presentation agent on at least some of the mobile wireless clients 210 may be configured to automatically present the advertisement, in accordance with the policy, for example, in response to the invocation of a communication function of a respective mobile wireless client 210.

In an embodiment, wireless server 205 may communicate to the carrier 112 (e.g. provide via a signal to a carrier server (not shown)) that a particular communication by a respective mobile wireless client 210 is associated with the presentation of an advertisement.

In an embodiment, wireless server 205 may coordinate back-up procedures with one or more of mobile wireless clients 210. Wireless server 205 can store configuration data within memory internal to wireless server 205, where the configuration data provides information to configure and/or operate wireless server 205. To provide a back-up to restore configuration of wireless server 205, wireless server 205 can automatically provide the configuration data to one or more of mobile wireless clients 210. With the configuration data stored on more than one of mobile wireless clients 210, a reconfiguration policy may be used to restore the configuration to wireless server 210.

In an embodiment, a machine-readable medium stores instructions, which, when performed by a machine, cause the machine to operate as a wireless server. As a wireless server, the instructions cause the machine to communicate with a plurality of mobile wireless clients, to manage information in a database for the wireless server including storing information associated with users of the mobile wireless clients, and to control dissemination of information from the database on a shared basis responsive to a determination of a privacy state of the information. The information associated with the users may include a unique user identification for each mobile wireless client. With the unique identification established only in the wireless server and each corresponding mobile wireless client, the wireless server and the mobile wireless clients define a trusted share group. In an embodiment, the managed information may include content of one or more of an interactive calendar, an address book, a message board, a task monitor, photograph data, music data, video data, text data, or combinations thereof.

In an embodiment, the instructions to operate as a wireless server may include one or more instructions to control communication to a mobile wireless client of a share group. The control of communication can include controlling the format of the communication, allowing communications in a format selected from an e-mail message, an instant messaging communication, a page message, a text communication, or a telephonic call. In an embodiment, the instructions to operate as a wireless server may include one or more instructions to control policies governing the flow of information from the members of the share group.

In an embodiment, instructions for operating as a wireless server include instructions to collect, in the wireless server, e-mails from one or more mail domains external to the wireless server, and to support e-mail services of the mobile wireless clients correlated to user identifications each collected e-mail corresponding to a user identification. The instructions may include one or more instructions to route an e-mail message between the one or more mobile wireless clients without processing through e-mail domains identified in the e-mail message.

In an embodiment, instructions for operating as a wireless server may include one or more instructions to make informational content, collected from sources external to the system, available to the mobile wireless clients. To make information available to the mobile wireless, one or more instructions provide for the information to be automatically copied from the wireless server to each mobile wireless client authorized, as may be applicable, to access the information. In an embodiment, instructions to operate the wireless server may include one or more instructions to access a video programming source external to the system and to make available video content from the video programming source to each mobile wireless client authorized to access the video content. The video content may be routed through the machine on which the wireless server instructions reside. In an embodiment, instructions to operate the wireless server may include one or more instructions to automatically provide data in an identified shared folder associated with the wireless server to an external server. The identified shared folder may be correlated to a user identification associated with at least one of the mobile wireless clients.

In an embodiment, the instructions to operate as a wireless server may include one or more instructions to store configuration data specifying a configuration of the wireless server and to automatically provide the configuration data to an external wireless device based on occurrence of a specified event. The external wireless device correlated to a user identification associated with at least one of the mobile wireless clients. One or more instructions may provide for the retrieval of the configuration data from the appropriate mobile wireless client. In addition, various functions for a wireless server as described herein with respect to Figures 1 and 2A may be implemented as instructions on a machine readable medium. The various instructions may include establishing secure communications and secure sharing in which the wireless server uses a secure form of identification for each mobile wireless client.

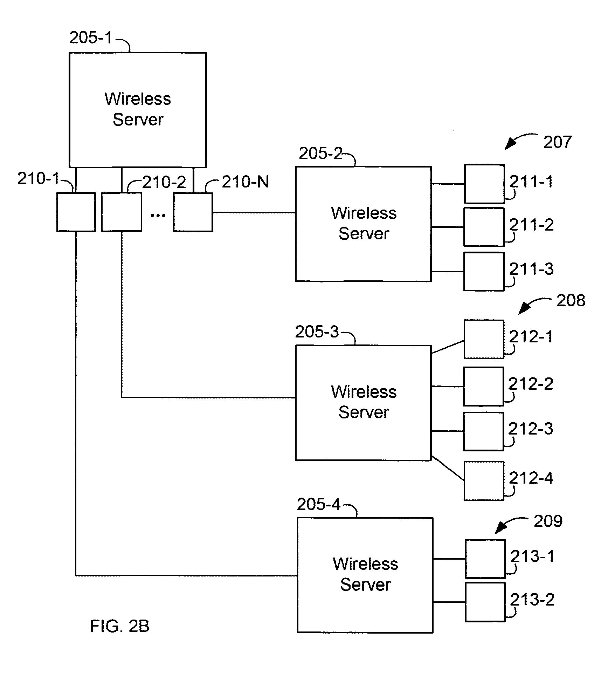

Figure 2B depicts an embodiment of a wireless architecture in which a relationship between mobile wireless clients and multiple wireless servers is illustrated. Wireless server 205-1 provides wireless services, similar to those services discussed with respect to wireless server 205 of Figure 2A, to the group of mobile wireless clients 210-1, 210-2 ... 210-N as a primary wireless server for the group. Members of the group may individually belong to another group associated with another wireless server, in which such a wireless server is secondary wireless server. For example, wireless servers 205-2, 205-3, and 205-4 are configured to groups 207, 208, and 209, respectively. Group 207 includes mobile wireless clients 211-1, 211-2, and 211-3. Group 208 includes mobile wireless clients 212-1, 212-2, 212-3, and 212-4. Group 209 includes mobile wireless clients 213-1 and 213-2. Mobile wireless client 210-N may also belong to group 207 in which case wireless server 205-2 is a secondary wireless server for mobile wireless client 210-N. Mobile wireless client 210-2 may also belong to group 208 in which case wireless server 205-3 is a secondary wireless server for mobile wireless client 210-2. Mobile wireless client 210-1 may also belong to group 209 in which case wireless server 205-4 is a secondary wireless server for mobile wireless client 210-1. In an embodiment, a mobile wireless client is assigned to a primary wireless server as a group member and is assigned, as a group member, to multiple secondary wireless servers.

In an embodiment, the functioning of a mobile wireless client with a primary wireless server and with one or more secondary wireless servers can be controlled by the policies of the wireless servers, where the policies of the primary wireless server dominate the policies of the secondary wireless servers. The assignment of a primary wireless server may include a negotiation in which the user of the mobile wireless client agrees to make a specific wireless server its primary wireless server in return for assignment to the group of the specific wireless server. Such negotiation may result in termination of some service features provided by the wireless servers upon the identification of these wireless servers as being secondary. Due to conflicts between wireless servers, a mobile wireless client may be limited in the number of secondary wireless server groups to which it belongs.

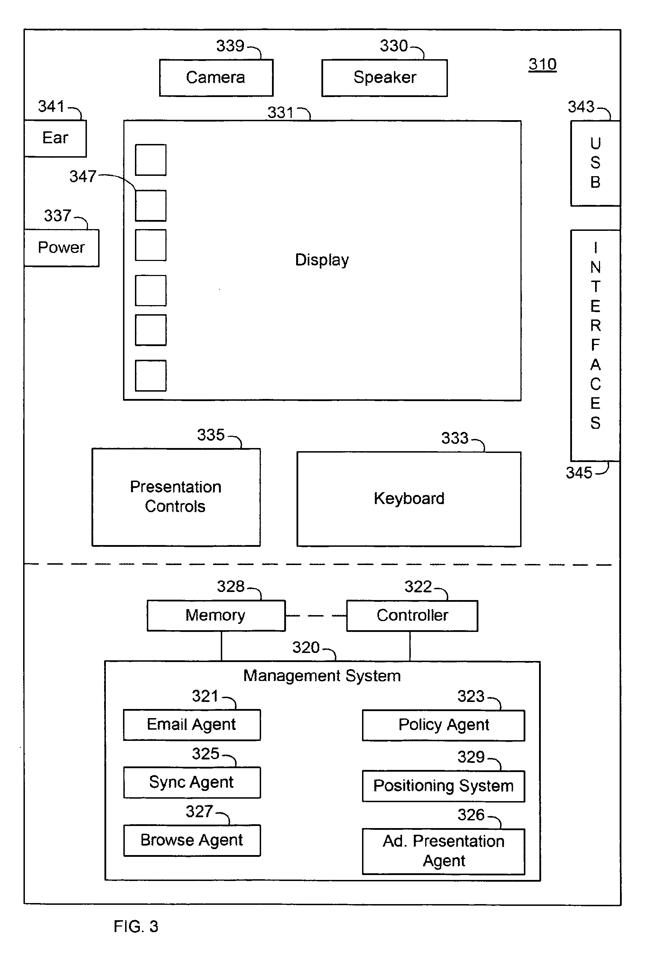

Figure 3 illustrates features of an embodiment of a mobile wireless device 310, also called herein a user equipment or UE, operable with more than one server or registrable with more than one network provider, or a combination of servers and providers. A UE that can be registered with more than one server or network provider can be called a multiple-mode wireless device, a multiple-mode wireless client, and/or a multiple-mode UE. Alternatively, a UE that has the ability to be registered with, and may be simultaneously connected to, multiple servers, server networks, and/or providers may also be called a multi-register or multi-connect UE.

Mobile wireless device 310 may be used as a client in architectures as depicted in Figures 1 and 2. Mobile wireless device 310 includes a controller 322, a memory 328 communicatively coupled to controller 322, and a management system 320 operable with controller 322. Memory 328 may include a secure digital (SD) card. Memory 328 may be directly coupled to controller 322 and coupled by an internal communication bus. Controller 322 may be realized as one or more processors. Management system 320 is configured to manage mobile wireless device 310 operable as a multiple-mode wireless client with respect to each of a plurality of wireless servers. Mobile wireless device 310 is configured to share information among the wireless servers, where the sharing of information is based on user identifications common to the mobile wireless device and the plurality of wireless servers. The shared information may include user-generated data as well as information acquired from sources other than the mobile wireless device 310 and the wireless servers. In an embodiment, mobile wireless device 310 may be a member of a share group of each of the wireless servers.

Mobile wireless device 310 may be arranged as a simple communication device or a communication device with a significant number of features beyond voice communication. With controller 322, memory 328, and management system 320 providing an underlying foundation, mobile wireless device 310 may include a speaker 330, a display 331, a keyboard 333, presentation controls 335, a power interface 337, or combinations thereof. Presentation controls 335 may include controls to direct visual presentations on display, controls to adjust the volume for speaker 330, and controls operable by a user to enhance the audio, visual use, and management of the mobile wireless device 310. Mobile wireless device 310 may include a camera 339, an ear interface 341 for earphones, a USB interface 343, other interfaces 345, or other user accessible options. A graphical user interface for display 331 may provide for the display of icons 337 to provide a shorthand presentation to the user. Mobile wireless device 310 may include other capabilities not directly visual to a user such as Bluetooth capabilities, access to a Wi-Fi network, and various other capabilities. Mobile wireless device 310 may be structured as a hand-held mobile wireless device, as a portable wireless computer, or as a combination of both.

In an embodiment, mobile wireless device 310 is configured as a member of a share group with at least one wireless server. Management system 320 operates to manage and regulate activity of mobile wireless device 310 with the share group. Management system 320 may include an e-mail agent 321, a policy agent 323, a sync agent 325, a browse agent 327, and a positioning system 329. E-mail agent 321 manages the receiving and sending of e-mails for mobile wireless device and is configured to manage its e-mail through at least one of the wireless servers. The transfer of e-mails via one of the wireless servers may be conducted using a secure channel with the wireless server. The secure channel may be correlated to a unique identifier of the mobile wireless device 310 that is also maintained by the wireless server defining a group relationship between the two entities.

Policy agent 323 controls the flow of information and conduct of interaction with wireless servers based on a set or rules or instructions. Such an agent in the mobile wireless device may be referred to as a UE policy agent, UEPA. Though mobile wireless device 310 may be registered in an information and control sharing mode with one or more wireless servers, mobile wireless device 310 and each of these wireless servers have their own individual policy agents. A UEPA is a separate entity from a SPA. In an embodiment, the policy for information flow in mobile wireless device 310 may be based on identification of a wireless server as being part of a share group to which mobile wireless device 310 is a member. If mobile wireless device 310 is a client to multiple wireless servers to which it is in a share group with each wireless server, policy agent 323 determines the controlling instructions for operating among and individually with the multiple wireless servers. Various criteria may be applied by policy agent 323. One set of criteria may depend on the wireless service to which the user of mobile wireless device 310 subscribes. Another set of criteria may depend on the group relationship of each of the wireless servers. A share relationship with a wireless server may involve confidential information that may limit the manner in which mobile wireless device 310 operates on and controls the flow of data among the share groups to which it belongs. Policy agent 323 may include a policy to select one of the wireless servers as a dominant wireless server with respect to the other wireless servers. With a dominant or primary wireless server identified, the set of rules may be prioritized according to the selection of dominant wireless server.

Positioning system 329 may be used in conjunction with policy agent 323 to establish a policy to use based on relative position of mobile wireless device 310, if there no overriding rule to select a primary wireless server. Positioning system 329 can be used to determine a position of the mobile wireless device with respect to each of the wireless servers. Based on this relative position, a wireless server deemed to be closest to mobile wireless device 310 may be selected as the primary wireless server. Positioning system 329 may include use of a global positioning system (GPS) within mobile wireless device 310. In an embodiment, management system 325 may use positioning system 329 to determine that mobile wireless device 310 is within a local area network of only one of the wireless servers. The local area network may be a Wi-Fi network. Determination of the closest wireless server in a local area network such as a Wi-Fi network may use a determination of signal strength associated with each of the wireless servers. In an embodiment, a secure control channel from the mobile wireless device 310 to a wireless server may be used to determine if the mobile wireless device is within a Wi-Fi network associated with the wireless server.

Sync agent 325 may be used to automatically interact with a wireless server identified as being a member of a share group for mobile wireless device 310. Upon receiving a communication from the wireless server that the wireless server has information associated with an identifier correlated to the mobile wireless device 310, sync agent 325 can automatically store the information in memory 328 upon download from the wireless server. Sync agent 325 may also update a table to identify the downloaded information relative to an assigned folder, the source of the information, and/or a privacy status of the information. Sync agent 325 may also upload information to a wireless server based on the relative status of the wireless server with respect to the information. With the assignment of the information to a folder, sync agent 325 agent automatically uploads the information wireless servers identified in mobile wireless device 310 as authorized to automatically receive the information. The transfer from mobile wireless device 310 to one or more wireless servers in response to the sync agent 325 may be conducted over a secure channel established by mobile wireless device 310. The information that may be automatically transferred includes, but is not limited to, personal calendar content, photographic content, music content, video content, text content, or combinations thereof.

Browse agent 327 provides a capability to browse folders within mobile wireless device 310 to select files within mobile wireless device 310 to view content on display 331 or hear content via speaker 330 or other appropriate hearing device. Browse agent 327 may provide a capability to browse folders within wireless servers to which mobile wireless device 310 is in a sharing relationship. Browse agent 327 may control the generation of commands from mobile wireless device 310 to a wireless server to browse folders on the wireless server to which mobile wireless device 310 is authorized access.

Advertisement presentation agent 326 may be configured to receive and optionally store advertisements (informational content) for presentation to a user of the mobile wireless device 310. Alternatively, Advertisement presentation agent 326 may receive links or other identifying data (not shown) with which to retrieve advertisements from a remote store (e.g. wireless server 205 or an information source 115) when commanded to present an advertisement. Advertisements may be received wirelessly, via removable media (not shown), via serial port, such as USB 243, etc.

Presentation may be via one or more outputs of the mobile wireless device 310, for example, display 331, speaker 330 or earphone output 341. Advertisement presentation agent 326 may comprise or be configured to interface with agents to facilitate the presentation of the advertisement.

In an embodiment, presentation may be automatically invoked. In one embodiment, presentations are automatically invoked in accordance with a policy from policy agent 323. For example, a policy may require that use of particular communication related features (e.g. particular user initiated communications) invoke the presentation of an advertisement. Such communications may be via email agent 321, a web-browser (not shown), an instant message agent (not shown), an SMS agent (not shown), a voice communication agent (e.g. for a cellular or other telephone call) (not shown), etc.

In an embodiment, a machine-readable medium stores instructions, which, when performed by a mobile wireless device, cause the mobile wireless device to operate as a client of multiple wireless servers. The mobile wireless device may be a hand-held wireless device. The mobile wireless device may be a portable wireless computer. In an embodiment, the instructions cause the mobile wireless device to operate as a multiple-mode wireless client to each of the wireless servers and to share information with the wireless servers. The information can be shared based on a user identification common to the mobile wireless device and the wireless server. The instructions may effectively configure the mobile wireless device in multiple share groups, one for each wireless server in a share relationship with the mobile wireless device. User identification information may be used on to establish secure communication and a secured sharing between the mobile wireless device and a wireless server on a share group arrangement. The shared information may include user-generated data.

In an embodiment, instructions to operate the mobile wireless device as a multiple-mode wireless client may include instructions to regulate functions of the mobile wireless according to a stored policy. The policy may depend on which of the wireless servers is taken to be the primary or dominant wireless server with respect to the other wireless servers. In an embodiment, the primary wireless server may be selected through application of instructions to determine the position of the mobile wireless device with respect to the other wireless servers. The instructions for determining positioning may be employed with a GPS system within the mobile wireless device. The instructions may direct the determination that the mobile wireless device is within a local area network of one of the wireless servers. The local area network may comprise a Wi-Fi network. One or more instructions may be employed to use a secure control channel to determine if the mobile wireless device is within the Wi-Fi network.

In an embodiment, instructions to operate the mobile wireless device as a multiple-mode wireless client may include instructions to control the flow of information. The instructions for regulating information flow may include, but are not limited to, instructions to manage reception and transmission of e-mails through at least one wireless server in a share group with the mobile wireless device, to share calendar content associated with the user identification, to apply a browser in the mobile wireless device to browse files on a wireless server in a share group with the mobile wireless device, to sync the flow of informational content into the mobile wireless from a wireless server in a share group with the mobile wireless device, to sync the flow of informational content from the mobile wireless to a wireless server in a share group with the mobile wireless device. The informational content may include, but is not limited to, calendar data, photograph data, music data, video data, text data, or combinations thereof.

In addition, various functions for a mobile wireless device as described herein with respect to Figures 1, 2A, 2B, and 3 may be implemented as instructions on a machine readable medium in the mobile wireless device. The various instructions may include establishing secure communications and secure sharing with wireless servers using a secure form of identification associated with the mobile wireless device being in different share groups with the wireless servers.

Features of an embodiment of a method for synchronizing (syncing) wireless entities based on a share basis are as follows. Information acquired in wireless entities may be synced among the wireless entities based on a privacy status and verification of identities corresponding to the privacy status. The information undergoing a sync process includes, but is not limited to, personal calendar data, photograph data, music data, video data, messaging data, and combinations thereof. The wireless entities may include a wireless server and a set of mobile wireless clients of the wireless server that together form a share group. In an embodiment, a mobile wireless client of the group is configured to browse files in the wireless server. In an embodiment, the wireless server is configured to provide views of its file content to a mobile wireless client of the group authorized to view the file content of the wireless server.

A privacy status of information acquired, and at least partially stored, is determined. The privacy status may be determined before and/or during the partial storage of the information. In an embodiment, information is acquired in a wireless server that is a member of a share group including one or more wireless mobile devices that are wireless clients of the wireless server. The wireless server initials and directs a sync process for the acquired information. Using a graphical user interface, a user of the wireless server can assign attributes to the acquired information that generate a privacy status for the information. The information can be flagged to be private to the wireless server. The information can be flagged to be private to a user correlated to one of the wireless mobile devices of the group. The information can be flagged to be shared by several users but not all of the users correlated to the group, which is a form of a limited private status, where each of the several users is correlated to one of the wireless mobile devices of the group. The information can be flagged to be shared by all members of the group, where each of the members is correlated to one of the wireless mobile devices of the group. The information can be flagged to be shared by all members of the group and by entities external to the group. The correlation to a wireless mobile device of the group may be realized as a mapping in the wireless server of a SRP key and user name to a wireless mobile device. The flagging of attributes by the wireless server may be conducted by assigning the information to a folder and associating, in one or more tables, the identity of the information, privacy indicators, and names or other ids of users having the privacy status. Other procedures may be used to provide a privacy status of information with mobile wireless devices. Alternatively, the information may have a predetermined privacy status with identified authorized users such that on reception of the information the wireless server automatically assigns the information to its predetermined folder. The predetermined privacy status may be based on the type of information or a specific identity of the information acquired.

In an embodiment, information is acquired in a mobile wireless device that is a member of a share group including a wireless server. The mobile wireless device may initiate and direct a sync process for the acquired information. The share group may include other mobile wireless devices. Using a graphical user interface on the mobile wireless device, a user of the mobile wireless device can assign attributes to the acquired information that generate a privacy status for the information. The information can be flagged to be private to a user correlated to the wireless mobile device acquiring the information. The information can be flagged to be shared by several users but not all of the users of the group, which is a form of a limited private status, where each of the several users is correlated to one of the wireless mobile devices of the group. The information can be flagged to be shared by all members of the group, each of the members correlated to one of the wireless mobile devices of the group. The information can be flagged to be shared by all members of the group and by entities external to the group. The correlation to a wireless mobile device of the group may be realized by viewing a list of the group members stored on the mobile wireless device that acquires the information or viewing a list of the group members accessible from the wireless server. The flagging of attributes by the mobile wireless device may be conducted by assigning the information to a folder and associating, in one or more tables, the identity of the information, privacy indicators, and names or other ids of users having the privacy status. Other procedures may be used to provide a privacy status of information with other mobile wireless devices of the group. Alternatively, the information may have a predetermined privacy status with identified authorized users such that on reception of the information the mobile wireless device automatically assigns the information to its predetermined folder. The predetermined privacy status may be based on the type of information or a specific identity of the information acquired. In an embodiment, a mobile wireless device may acquire informational content and a wireless server, which shares a group status with the mobile wireless device, may establish the privacy status for the informational content.

Data associated with the information is synced with wireless entities based on the privacy status and verification of identities corresponding to the privacy status. In an embodiment, when information acquired in a wireless server is moved to a sync folder, the wireless server automatically downloads the information to the mobile wireless devices that are identified in tables as being authorized to automatically receive the information. A sync folder is a folder whose contents are designated to undergo a sync process. These sync tables provide the privacy status and verification of the identities for automatic downloading. Sync folders may be created for each group member such that received information associated with the individual folders may be automatically downloaded to the associated group member. The download by the wireless server may be conducted based on the status of storage facilities on the target mobile wireless device. If the mobile wireless device does not have the appropriate storage medium, such as a SD card or other storage medium, or if the capacity of the storage medium of the mobile wireless device is insufficient, the download is not conducted and the mobile wireless device is notified of the lack of capacity.

A capacity limit may be set in the wireless server such that, if the size of the information to be downloaded is larger than the capacity limit, the wireless server will not send the information on a wireless channel. For file content over the capacity limit, the automatic download can be performed when the wireless server determines that a physical connection, such as a USB connection, has been established or that the mobile wireless device has accessed a Wi-Fi network of the wireless server. If such USB or Wi-Fi transport is lost during a transmission transaction, the transaction can be halted and restarted once the transport is reestablished. In addition, syncing of content can be regulated according to other status in the mobile wireless device or in the wireless server. For example, a content sync may be suspended if the battery capacity falls below a specified amount. In an embodiment, content sync may be suspended if the battery life falls below 20% of the full amount and may be resumed if the battery life exceeds 25% of the full amount.

The wireless server can download the information to a mobile wireless device via a Wi-Fi capability, a wired cable, a carrier-based network, or combinations thereof. A mobile wireless device can display the sync process from the wireless server on its screen as the sync process by the wireless server is being conducted. A mobile wireless device receiving the information may assign the information to one of its folder, where the folder may be a sync folder on the mobile wireless device. The mobile wireless device may store informational content received, in a sync process from a wireless server, in a secure digital memory in the mobile wireless device.

In an embodiment, a wireless server in a sync process with a mobile wireless device of its share group downloads a sync indicator to the mobile wireless device. The sync indicator represents that the wireless server has acquired information with the mobile wireless device identified as a share member. The identified information can be downloaded to the mobile wireless server at a later date. The wireless service may automatically download the indicator in response to the information being moved into a folder accessible by the wireless server. The folder may reside on a system external to the system in which the wireless server resides, where the wireless server is authorized to read the information from the external storage medium.

In an embodiment, information acquired in a mobile wireless device can be moved to a wireless server in a share group to which the mobile wireless device is a member. The mobile wireless device can be configured such that when information acquired in mobile wireless device is moved to a sync folder in the mobile wireless device, the mobile wireless device automatically uploads the information to the wireless server. Content in the mobile wireless device can be uploaded to and stored on the wireless server to provide a back-up of the content. The content is not limited to a particular type of content, but may be any content on the mobile wireless device. The mobile wireless device can upload the information to the wireless server via a Wi-Fi capability, a wired cable, a carrier-based network, or combinations thereof. In an embodiment, a mobile wireless device can monitor its operational status and adjust sync processing with a wireless server based on determined the status. For example, content syncing may be suspended if the battery capacity of the mobile wireless device falls below a specified amount. In an embodiment, content syncing may be suspended if the battery life falls below 20% of the full amount and may be resumed if the battery life exceeds 25% of the full amount.

Wireless server 205 maybe configured for browsing from a mobile wireless device. A browser in a mobile wireless device may be initiated to control browsing of a file directory of a wireless server. The mobile wireless and the wireless server belong to a common share group. A user of the mobile wireless device may view the files in the file directory of the wireless server through use of a graphical user interface of the mobile wireless device. The mobile wireless device may generate one or more signals to the wireless server to select and indicate that a file is to be downloaded to memory in the mobile wireless device, that the file is to be sent as an e-mail attachment, or that the file is to be viewed using an attachment server of the wireless server. The mobile wireless device may browse informational content that includes, but is not limited to, personal calendar content, photograph content, music content, video content, messaging content, and combinations thereof. The browsing activity may include browsing files having a format indicator selected from, but not limited to, doc, xls, pdf, ppt, jpg, png, bmp, gif, mp3, and wav.

Wireless server 205 may be configured to facilitate a mobile wireless device accessing and controlling an application executable on the wireless server. In various embodiments, the application may be different from an application to maintain and control a wireless communication link between the mobile wireless device and the wireless server. Authorization to access the application may be provided to a mobile wireless device as a member of the share group of the wireless server. The authorization may be correlated to the SRP key of the mobile wireless device that is also stored on the wireless server. Various types of applications in the wireless server may be accessed by the mobile wireless device. For example, a data manipulation application that performs complex computations ("data crunching") that uses a large amount of memory may be accessed to run in a server rather than the mobile wireless device. The application may be reside in the wireless server. In an embodiment, the application is virtually resident on the wireless server. The virtual residency occurs with the application stored in another server that is accessible by the wireless server. In an embodiment, an application to control and/or monitor functions of a facility is accessed. The application may control and/or monitor, for a facility, one or more of a heating management, lighting management, water management, physical security, management of a web cam. An application to control and/or monitor functions of facilities different from the primary facility may be accessed.

In an embodiment, a privacy status may be generated in the mobile wireless device and operatively attached to the results from executing the application in the wireless server. The privacy status may be transmitted to the wireless server to set accessibility of the results relative to other members of the share group and other entities that may access the wireless server.

In various embodiments, the ability to run home control or home monitoring programs may be realized using the secure connection from a home wireless server to a UE. Various devices, such as but not limited to cameras, baby-sound-detection equipment, other baby monitors, personal devices, personal programs, and other personal monitoring devices can be coupled to a home-based wireless server that controls access to the UE through a network such as made available by a network provider. Similarly, this allows for the private monitoring of small businesses, including remote, secure access of inventory control figures, production figures, monitoring of stocking areas and warehouses for shrinkage control, making sure off-hours personnel at public counters are not being threatened, and similar situations amenable to monitoring solutions. The various devices may be configured to provide outputs that may be monitored by the UE through the home-based wireless server both securely as well as without use of a third party and/or without making the output publicly available such as being broadcast over an internet type facility. Such an arrangement allows an individual user of the UE and the wireless server to avoid being forced to use third party monitoring services to obtain such personal monitoring. In addition, such an arrangement allows an individual user to maintain privacy with respect to one's home, business, and personal life by not making the monitored output accessible over public internets. The secure monitoring of the home and/or business may be provided with the output from monitoring devices being providing as encrypted data.

In an embodiment, a wireless server may be configured to have multiple groups of UEs registered as independent groups with the wireless server. In addition, a UE may register as a member of no group, one group, or a plurality of groups on the wireless server. The SPA may send multiple sets of policies to the UE, based on the groups to which the UE is registered with the server. The UEPA of the UE may resolve the different policies.

Alternatively, the SPA may resolve conflicts between policies of different groups and send a set of resolved policies to the UEPA for each group in which the UE is registered.

In an embodiment, a UEPA of a UE may be configured such that it presents a logical interface to each server to which the UE is connected such that the logical interface functions as if there is only one server connected. For such a configuration, the default status of the UEPA is to keep each connection independent such that there is no sharing of any information between servers and/or connection. However, the UEPA may direct the display of a split screen on the UE in which the multiple independent connections may be shown. Using the split screen, the UE user may manage the different connections. A UE registered and/or connected to a plurality of servers and/or providers may have a UEPA configured such that no sharing occurs between the servers. In an embodiment, the no sharing policy cannot be overridden by any SPA policy. For example, one server may be corporate server and another server may be a personal server, such as one located in a home, having a registered member that is a registered member of the corporate server. Information shared with members of the corporate server may not be allowed to be shared with members of the personal server. If a second member registered with the personal server is also registered with the corporate, information associated with the corporate server that is shared between the two members of both the corporate server and the personal server is provided through the logical interface associated with the corporate server. In an embodiment, a UEPA of a UE may have a policy that certain pre-defined groups or sets of servers and/or providers may provide SPA policies that will be used in operation between the designated groups, but no sharing will occur between that these groups and any other server and/or provider not in the pre-defined groups. Each of the pre-defined groups may be a group of one server.

A wireless server may be configured as a component of a system and to implement a method for routing e-mail messages with external domains directly between mobile wireless clients. A first wireless server may be communicatively operable with a plurality of mobile wireless clients. In one example embodiment, the wireless server may include a database configured to store information associated with users of the mobile wireless clients including a user identification for each mobile wireless client, and an e-mail agent including one or more e-mail proxies to collect or send e-mails from and to one or more external e-mail domains, managed by an external e-mail server or servers. According to one embodiment, these external domains may include e-mail domains such as Microsoft Hotmail®, and Google Gmail®. In another embodiment, the external e-mail domains may include corporate or other enterprise mail systems such as Microsoft Exchange®, IBM's Domino® and Novell's GroupWise®.

According to one embodiment, each e-mail corresponds to a user identification. An e-mail agent supports e-mail services of the mobile wireless clients correlated to the user identifications. The e-mail services include coordinating the sending and receiving of e-mail from each e-mail domain corresponding to the user identifications. The e-mail agent is further configured to include a direct routing function to route an e-mail message between the one or more mobile wireless clients without first processing the e-mail message through the external e-mail domain identified in the e-mail message. Accordingly, according to one example embodiment, the e-mail message is delivered without first being processed by the external e-mail server.

In one alternate embodiment, the external e-mail servers are also updated so that the e-mail records in these servers appear to have sent or received the direct routed e-mail. Accordingly, the external e-mail servers stay synchronized with any e-mail routed directly by the wireless server. In one embodiment, the external e-mail servers are directed, for example by e-mail agent, to synchronize the e-mail after the e-mail is first routed. In another embodiment, the external servers may be instructed to synchronize the e-mail after or simultaneously with the direct routing of the message between mobile wireless clients.

According to still another example embodiment, the direct routing of e-mails may be applied to other electronic communications such as instant messaging wherein instead of the external e-mail servers and domains there are instant messaging servers and the direct routing routes the instant message directly between the mobile wireless clients as opposed to through the external domain.

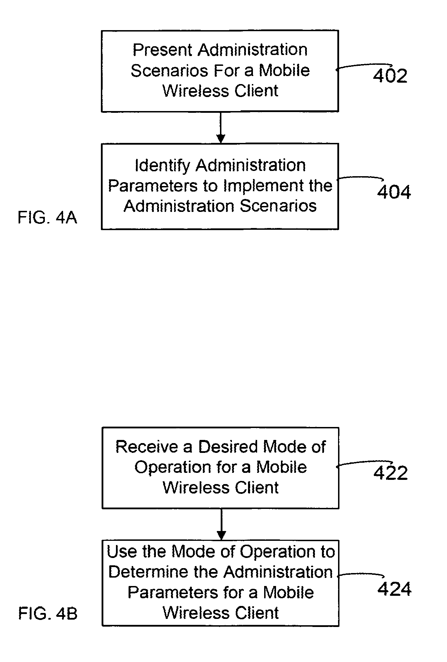

Figure 4A shows an embodiment of a method of administering mobile wireless clients, a wireless server or both. The wireless server provides a simplified user interface. In one embodiment, the wireless server displays one or more administration scenarios for at least one of a plurality of mobile wireless clients. A user of the wireless server selects the administration scenario. The wireless server automatically determines one or more administration parameters for implementing on or more policies for a mobile wireless client, a wireless server or both in response to the selection of the one or more administration scenarios. In one embodiment, the administration parameters may comprise parameters of an advertising policy for controlling the subsidization of mobile wireless device usage. Similarly, in one embodiment the wireless server automatically determines one or more administration parameters for the wireless server for controlling the operation of the mobile wireless client in response to the selection of the one or more administration scenarios.

At 402, the mobile wireless server may present, to a user, one or more administration scenarios for a mobile device. The wireless server then receives, from the user, a selection of at least one of the administration scenarios. At 404, without interaction from the user, the wireless server identifies one or more administration parameters to implement the selected administration scenarios. In one embodiment, the administration parameters may be operable to configure the mobile wireless device, the wireless server or both for the particular administration scenario and in accordance with the parameters being determined.

The administration scenario may include conditions or desired changes to the mobile wireless device, wireless server or both that involves a change to the configuration data on the respective device or server in order to implement the change. For example, administration scenarios include, but are not limited to setting a password, forgetting a password, misplacing a mobile device, losing a mobile device and managing modes for operation for the wireless device.

Figure 4B shows an alternate embodiment of a method of administering mobile wireless clients, wireless servers or both. At 420, a wireless server receives a desired mode of operation for a mobile wireless client. At 422, wireless server may use the desired mode of operation to determine one or more administration parameters to configure the mobile wireless client, wireless server or both for the desired mode of operation.

Modes of operation for the wireless device may include, but are not limited to, turning off a phone function, controlling web site access, restricting international phone calls, restricting phone calls to specified area codes, turning off Short Message Service (SMS) messages, turning off Multimedia Messaging Services (MMS), turning off Web browser use, blocking downloading of specified content (e.g. games), and logging or monitoring different types of usage on the mobile device. Modes of operation may further comprise presenting advertisements (e.g. to subsidize usage). Examples are discussed further herein below.

In one embodiment, the wireless server may transmit administration parameters from the wireless server to the mobile wireless client and configure the mobile wireless client for the desired mode of operation using the administration parameters. The administration parameters may be determined without human intervention.

In one embodiment, either the wireless server or the mobile wireless client may display administration scenarios or modes of operation on a simplified user interface. The simplified user interface displays less than all of the administration parameters available for configuration of the wireless device. Instead the simplified user interface may display one or more administration scenarios or modes of operation rather than displaying the administration parameters. For example, if the administration scenario for authentication of users on the system involves requiring a password, the administration parameters used to implement the administration scenario may include the following:
Password required parameter (true/false)
Maximum Password Age parameter (number of days)
Maximum Password Length parameter (number of characters)
Password Pattern Checks
Prohibited Passwords.
Although in this example, five parameters are involved to implement an administration scenario of requiring a password, the simplified user interface may not display any of the administration parameters, or the user interface may display less than all of the administration parameters. Instead of displaying some or all of the administration parameters, the user interface may display high-level or abstract descriptions of the administration parameters used to implement a password policy. For example, the user interface may offer as a choice for a user the question "Do you need to change your password?" The question is an example of an administration scenario.

The administration scenario may relate to a mode of operation such as presenting advertisements for the subsidization of usage of mobile wireless clients under a group plan of wireless service. Group plans of wireless service may have operate differently according to different subsidization rules or structures. Alternatively or in addition such plans may permit certain autonomy of implementation in a wireless server provided certain conditions are met.

For example, in a corporate or enterprise scenario, some of the group of mobile wireless devices may be exempt from receiving advertisements that subsidize usage under a group plan. Some of the group of mobile wireless device users may be partially exempt from receiving advertisements that subsidize usage under a group plan, e.g. receiving advertisements only after reaching a threshold of usage (e.g. using X bytes of data or Y seconds of voice traffic per month). Alternatively, requests for services outside certain business hours (i.e. within certain non-business hours) may define the trigger for providing an advertisement. Still others of the group under the plan may not be exempt from receiving advertisements regardless of the individual's own or the group's total usage or the time of day or combination of such parameters.

Similar subsidization scenarios may be defined for a home based wireless server providing services to users having a family or other group plan of wireless services. Under an example group plan, two users may have limited exemptions, so long as neither exceeds an individual traffic threshold, while three users have no exemptions. Alternatively, in accordance with a different subsidization plan, all users receive advertisements (i.e. the limited exemption terminates) once the total traffic for all users in the group in a time period exceeds a thresholds. In a further alternative, all users receive advertisements for the first N (e.g. 100) service requests (e.g. voice calls made or sent SMS messages) in a given time period. Thereafter, advertisements for the remainder of the period terminate.

In one embodiment, the administration parameters may include the following:
Wireless Service Provider
Group Plan Number
Responsive to the Group Plan number:
   1) Class of user within the Group Plan (Never Subsidize/Subsidize on Usage Threshold/Always Subsidize)
      Usage threshold (threshold quantity of data or voice traffic by individual user to trigger subsidization) or
   2) Class of user within the Group Plan (Never Subsidize/Subsidize on Usage Threshold)
      Usage threshold (threshold quantity of data or voice traffic by all plan users to trigger subsidization)

In another embodiment, the administration parameters may include the following:
Wireless Service Provider
Group Plan Number
Depending on the Group Plan number:
   1) Class of user within the Group Plan (Never Subsidize/Subsidize on Usage Threshold/Always Subsidize)
      Usage threshold (time of day period to subsidize).

In one embodiment the administration parameters may include
Wireless Service Provider
Group Plan Number
Number of Service Requests (Voice) to be Subsidized each billing period

Instead of displaying some or all of the administration parameters, the user interface may display high-level or abstract descriptions of the administration parameters used to implement a password policy. Alternatively, the user interface may display some of the administration parameters and determine others in response to the input or selection of the some. For example, providing the group plan number and class information may be sufficient determine remaining parameters in accordance with the group plan.

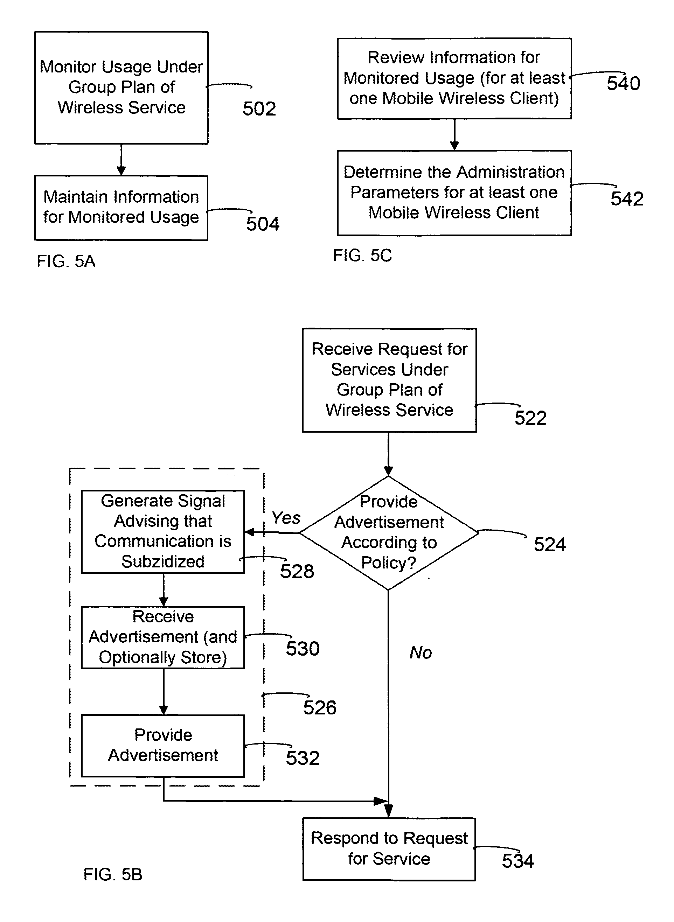

Figure 5A illustrates a first embodiment of a method of monitoring usage of a mobile wireless device for subsidizing usage under a group plan of wireless service. A wireless server monitors usage of at least some of a group of mobile wireless devices for which it provides services. The wireless server maintains information regarding the usage, for example to assist with determining when to provide an advertisement to subsidize usage. It may utilize the monitoring information to determine (i.e. change) administration parameters for a particular mobile wireless client, for example, in response to usage. A particular mobile wireless client may be configured to receive more or fewer advertisements in response to usage.

At block 502, wireless server monitors communication usage comprising communication traffic between the wireless server and a particular mobile wireless device, which communication traffic is communicated under the group plan of wireless service. Typically such usage comprises both send and receive traffic. A quantity measure of traffic may be comprise units of data transfer or, in some instances, time, for example. For a particular instance of usage, an occurrence time (i.e. time or time and date) may also be monitored.

In association with the monitoring, the wireless server may maintain (e.g. compute and store) information relating to the usage (block 504). The information may comprise one or more total amounts of traffic for the particular mobile wireless device, the group plan of wireless service or one or more groups of mobile wireless devices sharing characteristics under the group plan of wireless service (i.e. mobile wireless devices sharing the same class). Information totals may comprise individual send totals, receive totals and combined totals. Information totals may comprise totals by type of communication (e.g. voice or data with further granularity such as type of data (e.g. email or Internet browsing)). In one embodiment, the wireless server also maintains a store of information relating to individual instances of usage (e.g. for each mobile wireless device: quantity of traffic, occurrence time, type(s) and totals). From such information, the wireless server may determine further information such as a count of instances of traffic per individual mobile wireless device or across one or more groups (i.e. classes) thereof.

Figure 5B illustrates an embodiment of a method of providing a subsidizing advertisement under a group plan of wireless service. The wireless server determines whether to provide at least one advertisement for presentation by a particular mobile wireless device, in accordance with an advertising policy (e.g. as defined by certain administration parameters described above) of the wireless server for a particular mobile wireless device receiving services under the group plan of wireless service. The determination may be responsive to the monitoring operations (Figure 5A) and the information maintained thereby. If applicable, the wireless server generates a signal for a provider of wireless services under the group plan (e.g. a carrier) to advise that a particular communication is subsidized. The benefit provider may receive the signal and determine the applicable benefit. The wireless server requests and receives an advertisement for providing to a mobile wireless device.

At block 522, wireless server receives a request for a service under the group plan of service from a one of the mobile wireless devices. Wireless server determines, in accordance with an applicable advertisement policy and, as may be applicable, the monitoring of communication traffic, whether to subsidize the request by providing an advertisement for presentation by the wireless mobile communication device (block 524). If an advertisement is to be provided, it is provided at block 526 according to one embodiment. The wireless server requests and receives an advertisement for communicating to the mobile wireless communication device 530 which may be optionally stored. The wireless server generates a signal to advise a wireless service provider (e.g. a carrier) that a particular communication is subsidized (block 528). Though not shown, the provider may receive the signal for determining the applicable benefit. The advertisement may be received in response to the signal or may be requested via a separate signal to an information source (not shown). The advertisement is provided for presentation by the mobile wireless device to subsidize the communication associated with the service requested (block 534). For example, it may be provided by "push" downloading the advertisement or a link thereto. At block 534, an applicable response to the request for service is provided.

Optionally (not shown) advertisements may be obtained and stored (i.e. cached) by wireless server such as at a time before performing operations 524 for example to hasten responses to request for a service. Advertisements may be pre-requested and stored for providing more than once to mobile wireless devices including more than once to the same mobile wireless device. Optionally (not shown) block 528 operations may be performed separately, such as during or after operations 530, 532, etc. As described further below, in one embodiment, an advertisement may be requested for one request for service for a first particular user but cached and provided to a second particular user. That is, one particular user may avoid receiving and viewing an advertisement, delegating or otherwise having another user receive and view the advertisement. A benefit may be determined an provided by having any one in the group receive and view the advertisement.

Figure 5C illustrates an embodiment of a method of managing at least one (e.g. of a group of) mobile wireless client in response to monitored usage. At step 540 information representing the monitored usage is reviewed. Such information may comprise the information maintained at step 504. For example, information may be aggregated, averaged or otherwise computed to provided desired statistics concerning usage of specific individual mobile wireless clients, one or more groups of such clients (e.g. sharing a common characteristic) or all monitored clients. At step 542, a determination of administration parameters for at least one of the mobile wireless clients is made. The determination may result in a change or no change to parameters for a particular mobile wireless client.

Operations of Figure 5C may be configured to manage bandwidth (or other usage measure) of wireless services for the group of mobile wireless clients. As noted, mobile wireless clients may be grouped (e.g. into classes) such that different classes may receive different levels of wireless service. By way of example, some clients in one class may receive no advertisements; some clients in another class may receive occasional advertisements or a few per period (e.g. month/day/week); some clients in a further class may receive more advertisements than another class; and some in yet a further class may always receive advertisements. In a corporate scenario, for example, mobile wireless clients for executives may be grouped in a class that receives no advertisements. Mobile wireless clients for general management employees may be grouped in a class receiving occasional advertisements and mobile wireless clients for others may be grouped in classes receiving more advertisements. Mobile wireless clients for certain specific employees may be assigned client devices outside their typical "class" in accordance with need or other importance measures. (e.g. those working remotely, safety employees, IT administrators, etc.). In a family scenario, different family members may be assigned to different groups or classes to receive different levels of wireless service such as more or fewer ads per class.

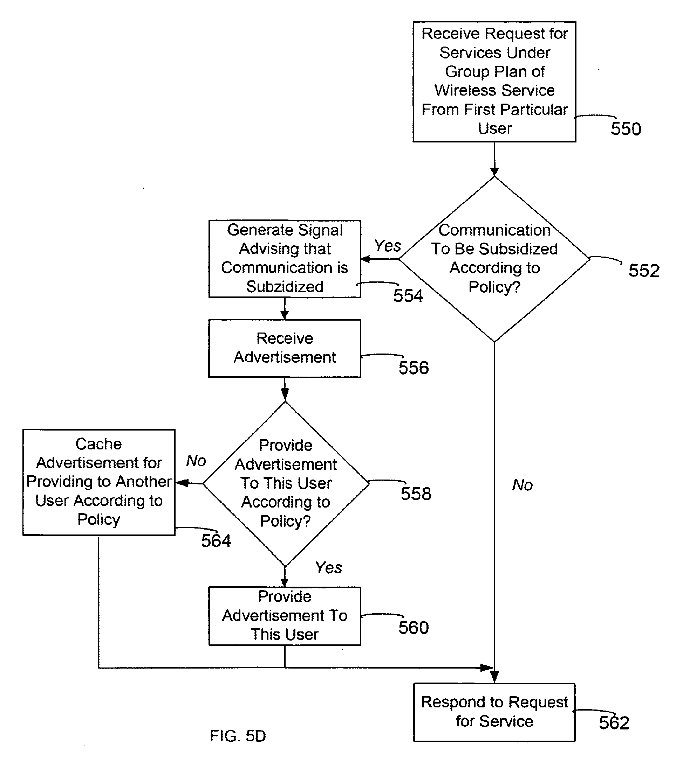

Figure 5D illustrates an embodiment of a method of providing a subsidizing advertisement under a group plan of wireless service. The wireless server determines whether to provide at least one advertisement for presentation by a particular mobile wireless device, in accordance with an advertising policy (e.g. as defined by certain administration parameters described above) of the wireless server for a particular mobile wireless device receiving services under the group plan of wireless service. The determination may be responsive to the monitoring operations (Figure 5A) and the information maintained thereby. If applicable, the wireless server generates a signal for a provider of wireless services under the group plan (e.g. a carrier) to advise that a particular communication is subsidized. The benefit provider may receive the signal and determine the applicable benefit. The wireless server requests and receives an advertisement for providing to a mobile wireless device. However, the advertisement may be cached and provided to a different mobile wireless device and not the device receiving the particular subsidized communication.

By way of example, in one embodiment, a family or an enterprise such as a corporation may configure a group distribution of ads. In the family scenario where a group of user in a group plan comprises one or more parents and one or more children as users, operations may be configured so that a parent's communication is subsidized by having a child receive and view an advertisement. That is, a benefit may be determined for the group or a member of the group if any one of the group views the advertisement. In once scenario, a father exceeds a threshold number of minutes of service. For subsequent calls during the period, server 205 can request an advertisement to subsidize the father's call. Server 205 can cache the call to be viewed by a child instead such as when the child makes a next call. In one embodiment, the children users may get advertisement free calls as long as the father (or another parent or child) has not exceeded a limit.

With reference to Figure 5D, at 550 request for services (e.g. a voice call) under the group plan is received from a particular device associated to a first user (e.g. a father). A determination is made (552) whether to subsidize the communication according to the policy (e.g. because father has exceed a threshold number of minutes under the plan). If not, via No branch to 562, the request for service is served. If the call is to be subsidized, via Yes branch to 554, a signal is generated advising that the call is to be subsidized. An advertisement is received (556). At 558, a determination is made whether the advertisement is to be provide to the particular user requesting the service according to the policy. If yes, operations proceed to provide the advertisement (560) and respond to the request for service (562). If no, the advertisement is cached (564) to be provided to another user according to the policy and operations proceed to respond to the request for service (562).

Alternatively (not shown), a family can agree to receive a certain number of advertisements. These advertisements may be accumulated by server 205 and each advertisements could be sent out to the users in a first come first serve basis, until the all the advertisements are delivered to specified end users. For example, a family could sign up to receive 100 advertisements. During the 1st 100 voice calls, the advertisements would be provided for viewing, regardless of which devices were being used, thereafter, the calls being "ad-free."

Monitoring usage of particular classes, individual clients or all clients may be useful to manage bandwidth or other service usage. For example, one or more clients may be re-assigned to a different class (for example, automatically) in response to usage monitoring. For example, in one embodiment, should a particular mobile wireless client exceed a usage threshold during a particular period (e.g. exceeding N Mbytes for the current month, exceeding (or averaging) N Mbytes in each of the last Y months, etc.), its administration parameters may be changed. The administration parameters may be changed automatically to move the particular client to a different group of clients (i.e. to assign it similar administration parameters of a different class) such that the client receives more advertisements to subsidize its usage. In one embodiment, should a particular client (or class) exceed a usage threshold (e.g. monitored over a particular period), the client (or class) may have its services suspended (e.g. for a period of time). In one manner, a class or classes may be defined for which certain services are refused and the client assigned to the class automatically when the threshold is triggered. Operations of Figure 5C may be performed periodically to manage bandwidth usage. In one embodiment, at the end of a particular period, clients may be re-assigned back to an original class (or services resumed) as the monitoring period resets.

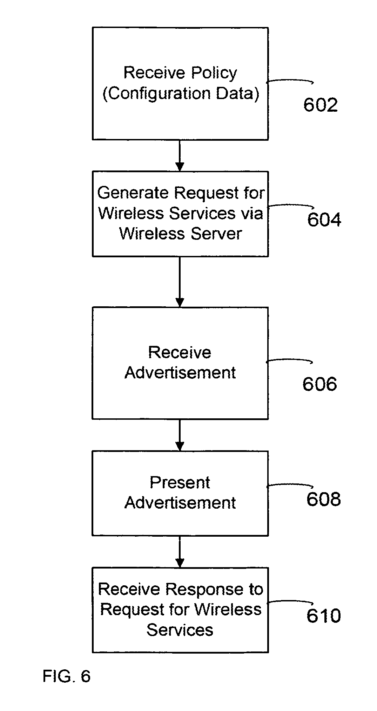

Figure 6 illustrates an embodiment of a method of presenting an advertisement to subsidize usage of a mobile wireless device. A mobile wireless device is configured for communication via a wireless server in accordance with a policy for controlling the mobile wireless device. The mobile wireless device requests a service from the wireless server under a group plan of wireless services and receives an advertisement for subsidizing usage of the mobile wireless device. The advertisement is presented via a at least one output of the mobile wireless device in accordance with the policy.

At block 602, a policy is received. The policy may control which services are available via the mobile wireless device (e.g. instant messaging communications, Internet browsing communications, etc.) and whether advertising may be provided to subsidize requests for particular services that are available. For example, the policy may provide that advertisements may be provided to supplement voice communications or SMS communications and that such advertisements may invoke the advertisement presentation agent.

At block 604 the mobile wireless device generates a signal requesting a wireless service via wireless server in accordance with the policy. The signal may be generated in response to user input such as an invoking a browser to browse a web page, make a voice call, etc. At block 606, a signal providing an advertisement is received. The signal may comprise the advertisement or a link to retrieve same. At block 608, advertisement presentation agent presents the advertisement in accordance with the policy, retrieving, storing or both as may be applicable. At block 610, a signal providing a response to the request for wireless services is received, as may be applicable.

Though the embodiments herein are described primarily with reference to subsidizing usage under a group plan of wireless services from a wireless carrier, advertisements may be provided to receive other benefits, whether from carriers or other parties. For example, other benefits from carriers or other parties may include the accumulation of credits or points. The accumulation may be applied to receive free or reduced price goods or services. For example, a carrier may apply credits to reduce the price of a new mobile wireless device or offer access to a service or application via the mobile wireless device (e.g. a multiple party interactive game). A third party advertisement provider, (e.g. not a carrier) similarly may offer advertisements in exchange for providing a benefit to mobile wireless device users. The benefit may include subsidizing a carrier's charges for the mobile device user, offering credits or other points to the user or offering access to one or more services or applications via the mobile wireless device, among others. In such a case, the group plan associated with the provision of advertisements may not be a group plan for wireless service per se.

Though the plans of service are described as group plans, a wireless server and mobile wireless device may be configured for respectively providing and presenting advertisements under a single user plan either with a carrier or third-party advertisement provider.

Though the wireless server is primarily described as providing data-related services or functions to the mobile wireless devices, a wireless server may be configured to provide voice related services or functions whether alone or in combination with data services or functions, and be similarly configured to provide advertisements as herein described.

Though described primarily with respect to advertisements, other information content may be provided including notices, training or other material that may not comprise commercial or other information promoting or selling a product, service or both.

In addition to the functions and features described hereinabove, wireless server 205 may be configured to comprise a collaboration tool and agent for informational content that may be stored in an informational content management subsystem of the tool. The informational content management subsystem may receive and/or provide information relating to informational content from a user through a web console user interface and/or from an external application through the external interface. The external interface may use an API of an external application and/or a scrapping program to obtain the information. The informational content management subsystem may utilize a synchronization table and the agent to provide informational content to and/or receive informational content from a wireless mobile device. The agent may enable communication between the wireless mobile device and the collaboration tool. The wireless device may be a member of the group 110 of wireless devices (see Figure 1).

The synchronization table may be capable of synchronizing the mobile wireless device with the wireless server 205. The synchronization table may be retained on the wireless server 205.

By way of example, the informational content management subsystem may include an informational content access module, an informational content display module, an informational content provider module, an entry module, an identification module, a record module, an acknowledgement receiver module, a synchronization update module, a disassociation module, a distribution determination module, a synchronization access module, a delivery status determination module, a notification module, a content retainer update module, a synchronization modification module, a deletion module, and/or a content data modification module. Other modules may also be used.

The informational content access module accesses (e.g., receives) private informational content associated with a single user and/or shared informational content associated with the single user and at least one other user. The informational content may be received from the one or more information sources 115 (see Figure 1).

The informational content display module displays the private informational content and the shared informational content on a same user interface for the single user. The same user interface may include, by way of example, the web console user interface and/or a user interface on the wireless mobile device. The informational content provider module delivers or transfers the shared informational content (e.g., received from of the one or more information sources 115) and/or private informational content to the mobile wireless device associated with the user. The provided informational content may be capable of re-synchronizing the mobile wireless device.

The entry module adds and/or removes an entry in a user configuration table for a user. The identification module identifies private informational content and/or shared informational content associated with the user.

The record module adds a synchronization record for the shared informational content and/or the private informational content to a synchronization table and/or removes a synchronization record for the shared informational content and/or the private informational content from a synchronization table. The acknowledgement receiver module receives an update acknowledgement from the mobile wireless device.

The synchronization update module updates the synchronization table based on the received update acknowledgement and/or provided informational content based on the privacy state. The disassociation module disassociates a private content retainer (e.g. a folder or a content table) associated with a user.

The distribution determination module determines a distribution of the informational content to one or more mobile wireless devices based on the privacy state of the informational content.

The synchronization access module accesses one or more synchronization records associated with informational content based on a distribution determination. The delivery status determination module determines a delivery status of the informational content associated with the one or more synchronization records. The notification module sends a notification regarding the informational content to a user and/or receives a notification to delete informational content (e.g., shared informational content).

The content retainer update module updates a content retainer (e.g., a folder or a content table) of the content type to include the informational content. The content retainer may be capable of tracking the privacy state of the informational content. The synchronization modification module modifies a synchronization table for one or more users to reflect deletion of the shared informational content. The deletion module provides a deletion request for the shared informational content to the mobile wireless device of a user and/or receives a deletion acknowledgement from the mobile wireless device of the user. The content data modification module modifies a content data structure of the content type to remove the informational content.

By way of example, the wireless mobile device may include an informational content receiver module, a content data structure update module, an information display module, an acknowledgement provider module, a deletion request receiver module, and/or an omission module. Other modules may also be used.

The informational content receiver module receives informational content of a content type from the wireless server 205 (see Figure 2). The content data structure update module updates a content data structure of the content type to include and/or remove the informational content. The information display module displays information associated with the informational content on a user interface of the mobile wireless client.

The acknowledgement provider module provides an update acknowledgement and/or a deletion acknowledgement to the wireless server 205.

The deletion request receiver module receives a deletion request for shared informational content of a content type from the wireless server 205. The omission module omits the shared informational content from display of the information associated with the content data structure on a user interface.

As such, wireless server 205 may be configured to communicatively connect mobile wireless devices for conducting messaging and collaboration. In one embodiment, wireless server 205 connects messaging and collaboration agents (i.e. software) on an enterprise network to synchronize respective email and personal information management (PIM) information between devices on that network (e.g. desktops) and the mobile wireless devices. Example messaging and collaboration software in an enterprise context comprises Microsoft Exchange, Lotus Domino and Novell GroupWise. In another embodiment the network may comprise a home network. In either of these embodiments, the wireless server may also synchronize email and PIM information from remote information sources coupled to the respective enterprise or home network. PIM information may comprise address book information, calendar appointment information, notes, journal, tasks, reminders and messaging information. Messaging information may include email, instant messaging, SMS, MMS, fax, voicemail, etc. Wireless server may provide wireless connection services to communicatively couple the mobile wireless devices to information sources (i.e. applications or devices) on the respective enterprise or home network or other networks (e.g. via the Internet).

Various embodiments or combination of embodiments for apparatus and methods for a wireless server, as described herein, can be realized in hardware implementations, software implementations, and combinations of hardware and software implementations. These implementations may include a machine-readable medium having machine-executable instructions, such as a computer-readable medium having computer-executable instructions, for operating the wireless server in a group relationship with one or more mobile wireless clients such that information is disseminated among the group based on a privacy status associated with the information. The communications of the wireless server with the group and sharing of information can be conducted on a secured basis. The machine-readable medium is not limited to any one type of medium.

Various embodiments or combination of embodiments for apparatus and methods for a mobile wireless device, as described herein, can be realized in hardware implementations, software implementations, and combinations of hardware and software implementations. These implementations may include a machine-readable medium having machine-executable instructions, such as a computer-readable medium having computer-executable instructions, for operating the mobile wireless device in a multiple-mode arrangement as a wireless client of multiple wireless servers. The mobile wireless device may be configured in a group relationship with the wireless servers such that the mobile wireless device information interact with the wireless servers to receive and send information based on a privacy status associated with the information. The communications of the mobile wireless device with each wireless server of an associated group can be conducted on a secured basis. The machine-readable medium is not limited to any one type of medium.

Although specific embodiments have been illustrated and described herein, it will be appreciated by those of ordinary skill in the art that any arrangement that is calculated to achieve the same purpose may be substituted for the specific embodiments shown. It is to be understood that the above description is intended to be illustrative, and not restrictive, and that the phraseology or terminology employed herein is for the purpose of description and not of limitation. Combinations of the above embodiments and other embodiments will be apparent to those of skill in the art upon studying the above description.

## Claims

1. A computer implemented method of managing usage of wireless services by a group of mobile wireless devices (102) sharing a least one common criterion to provide wireless services of at least one network provider, the method comprising:
monitoring the communication traffic usage of wireless services (502) by a group (110, 111) of mobile wireless devices for generating and maintaining information (504) representing a quantity measure of the traffic usage by the group;
maintaining at least one policy (404, 424) for managing the usage, said at least one policy comprising administration parameters configured for determining whether to provide an advertisement to a respective one of the group of mobile wireless devices responsive to the quantity measure of traffic usage by the group; and
providing advertisements (532, 560) to at least one of the group of mobile wireless devices for presentation in accordance with the administration parameters thereby to obtain a benefit subsidizing the usage of wireless services by the group.

2. The method of claim 1 comprising generating a signal (528, 554) to advise a provider of the benefit of the providing of the advertisement.

3. The method of any one of claims 1 or 2 wherein the at least one policy defines a plurality of classes for said mobile wireless devices to provide different levels of wireless services to groups of said mobile wireless devices and wherein the administration parameters provide advertisements in accordance the classes of wireless services.

4. The method of claim 3 further comprising periodically reviewing said information (540) and automatically assigning (542) a particular mobile wireless device to a particular one of said plurality of classes in response to the reviewing thereby to manage said usage of wireless services.

5. The method of claim 4 further comprising suspending the wireless services provided to a mobile wireless device in response to said reviewing.

6. The method of any one of claims 1 to 5 further comprising providing a user interface (402) for defining the at least one policy and administration parameters for particular mobile wireless devices.

7. The method of any one of claims 1 to 6 wherein at least some of the group of mobile wireless devices share a group plan of service from a network provider and wherein the advertisement policy is correlated to the group plan of service.

8. The method of claim 7 wherein the benefit is determined in accordance with the group plan of service.

9. The method of any one of claims 1 to 8 further comprising receiving a request for wireless services (550) from a particular one of the group of mobile wireless devices; and wherein the step of providing advertisements comprises providing the advertisements to another one of the group such that the benefit is obtained if the advertisement is provided for presentation by any one of the group

10. The method of any one of claims 1 to 9 wherein the benefit comprises a subsidization for usage of services of a particular network provider.

11. The method of any one of claims 1 to 10 wherein providing advertisements is further responsive to respective requests for wireless services (522, 550).

12. A computer-readable medium that stores instructions, which, when performed by a computer, cause the computer to perform a method in accordance with any one of the preceding claims.

13. A wireless server (205) comprising:
a router (224) to communicate with a plurality of mobile wireless clients;
a processor (222) and memory storing instructions, which, when performed by the processor, cause the processor to perform a method in accordance with any one of claims 1 to 11.

14. A mobile wireless device (102) comprising:
a controller (322) and memory (328) coupled thereto, said memory storing instructions for configuring the controller to:
receive at least one policy (602) for controlling operation of the mobile wireless device with at least one wireless server managing operation of a group of mobile wireless devices sharing a least one common criterion to provide wireless services of at least one network provider, said server monitoring the communication traffic usage of wireless services by the group of mobile wireless devices to provide advertisements responsive to said monitoring generating a quantity measure of the traffic usage by the group, said at least one policy comprising configuration data for presenting advertisements in response to the quantity measure of traffic usage by the group and in response to at least some requests to the at least one wireless server for wireless services;
request a wireless service (604) in accordance with the policy from a respective one of the at least one wireless server;
receive an advertisement (606) from the respective one of the at least one wireless server; and
present the advertisement (608) in accordance with the policy via at least one output of the mobile wireless device.

15. The mobile wireless device of claim 14 wherein the mobile wireless device receives services from a particular network provider in accordance with a group plan of service and wherein the receiving of an advertisement is correlated with conditions of the group plan of service.

## Patentansprüche

1. Computerimplementiertes Verfahren zum Verwalten einer Nutzung von drahtlosen Diensten durch eine Gruppe von mobilen drahtlosen Vorrichtungen (102), die zumindest ein gemeinsames Kriterium teilen, um drahtlose Dienste von zumindest einem Netzwerkanbieter vorzusehen, wobei das Verfahren aufweist:
Überwachen der Kommunikationsverkehrsnutzung von drahtlosen Diensten (502) durch eine Gruppe (110, 111) von mobilen drahtlosen Vorrichtungen zum Erzeugen und Unterhalten von Information (504), die ein Quantitätsmaß der Verkehrsnutzung durch die Gruppe repräsentiert;
Unterhalten zumindest einer Richtlinie (404, 424) zum Verwalten der Nutzung, wobei die zumindest eine Richtlinie Administrationsparameter aufweist, die konfiguriert sind zum Bestimmen, ob eine Werbeanzeige an eine jeweilige aus der Gruppe von mobilen drahtlosen Vorrichtungen vorzusehen ist in Reaktion auf das Quantitätsmaß einer Verkehrsnutzung durch die Gruppe; und
Vorsehen von Werbeanzeigen (532, 560) an zumindest eine aus der Gruppe von mobilen drahtlosen Vorrichtungen zur Präsentation in Übereinstimmung mit den Administrationsparametern, um **dadurch** einen Vorteil zu erlangen, der die Nutzung von drahtlosen Dienste durch die Gruppe subventioniert.

2. Verfahren gemäß Anspruch 1, das aufweist Erzeugen eines Signals (528, 554), um einen Anbieter über den Vorteil des Vorsehens der Werbeanzeige zu benachrichtigen.

3. Verfahren gemäß einem der Ansprüche 1 oder 2, wobei die zumindest eine Richtlinie eine Vielzahl von Klassen für die mobilen drahtlosen Vorrichtungen definiert, um unterschiedliche Ebenen von drahtlosen Diensten an Gruppen der mobilen drahtlosen Vorrichtungen vorzusehen und wobei die Administrationsparameter Werbeanzeigen in Übereinstimmung mit den Klassen von drahtlosen Diensten vorsehen.

4. Verfahren gemäß Anspruch 3, das weiter aufweist ein regelmäßiges Überprüfen der Information (540) und automatisches Zuweisen (542) einer bestimmten mobilen drahtlosen Vorrichtung zu einer bestimmten aus der Vielzahl von Klassen in Reaktion auf das Überprüfen, um **dadurch** die Nutzung von drahtlosen Diensten zu verwalten.

5. Verfahren gemäß Anspruch 4, das weiter aufweist ein Suspendieren der drahtlosen Dienste, die an eine mobile drahtlose Vorrichtung vorgesehen werden, in Reaktion auf das Überprüfen.

6. Verfahren gemäß einem der Ansprüche 1 bis 5, das weiter aufweist Vorsehen einer Benutzerschnittstelle (402) zum Definieren der zumindest einen Richtlinie und Administrationsparameter für bestimmte mobile drahtlose Vorrichtungen.

7. Verfahren gemäß einem der Ansprüche 1 bis 6, wobei zumindest einige aus der Gruppe von mobilen drahtlosen Vorrichtungen eine Gruppendienstevereinbarung von einem Netzwerkanbieter teilen und wobei die Werbeanzeigenrichtlinie mit der Gruppendienstevereinbarung korreliert.

8. Verfahren gemäß Anspruch 7, wobei der Vorteil in Übereinstimmung mit der Gruppendienstevereinbarung bestimmt wird.

9. Verfahren gemäß einem der Ansprüche 1 bis 8, das weiter aufweist Empfangen einer Anforderung für drahtlose Dienste (550) von einer bestimmten aus der Gruppe von mobilen drahtlosen Vorrichtungen; und wobei der Schritt eines Vorsehens von Werbeanzeigen aufweist ein Vorsehen der Werbeanzeigen an eine andere aus der Gruppe, so dass der Vorteil erlangt wird, wenn die Werbeanzeige zur Präsentation durch irgendeine aus der Gruppe vorgesehen ist.

10. Verfahren gemäß einem der Ansprüche 1 bis 9, wobei der Vorteil eine Subventionierung zur Nutzung von Diensten eines bestimmten Netzwerkanbieters aufweist.

11. Verfahren gemäß einem der Ansprüche 1 bis 10, wobei ein Vorsehen von Werbeanzeigen weiter in Reaktion auf jeweilige Anforderungen für drahtlose Dienste (522, 550) ist.

12. Computerlesbares Medium, das Anweisungen speichert, die bei Durchführung durch einen Computer den Computer veranlassen, ein Verfahren in Übereinstimmung mit einem der vorhergehenden Ansprüche durchzuführen.

13. Drahtloser Server (205), der aufweist:
einen Router (224) zum Kommunizieren mit einer Vielzahl von mobilen drahtlosen Clients;
einen Prozessor (222) und einen Speicher mit gespeicherten Anweisungen, die bei Durchführung durch den Prozessor den Prozessor veranlassen, ein Verfahren in Übereinstimmung mit einem der Ansprüche 1 bis 11 durchzuführen.

14. Mobile drahtlose Vorrichtung (102), die aufweist:
eine Steuervorrichtung (322) und einen damit verbundenen Speicher (328), wobei der Speicher Anweisungen speichert, um die Steuervorrichtung zu konfigurieren zum:
Empfangen zumindest einer Richtlinie (602) zum Steuern einer Operation der mobilen drahtlosen Vorrichtung mit zumindest einem drahtlosen Server zum Verwalten einer Operation einer Gruppe von mobilen drahtlosen Vorrichtungen, die zumindest ein gemeinsames Kriterium teilen, um drahtlose Dienste von zumindest einem Netzwerkanbieter vorzusehen,
wobei der Server die Kommunikationsverkehrsnutzung von drahtlosen Diensten durch die Gruppe von mobilen drahtlosen Vorrichtungen überwacht zum Vorsehen von Werbeanzeigen in Reaktion auf das Überwachen, ein Quantitätsmaß der Verkehrsnutzung durch die Gruppe erzeugt, wobei die zumindest eine Richtlinie Konfigurationsdaten aufweist zum Präsentieren von Werbeanzeigen in Reaktion auf das Quantitätsmaß von Verkehrsnutzung durch die Gruppe und in Reaktion auf zumindest einige Anforderungen an den zumindest einen drahtlosen Server für drahtlose Dienste;
Anfordern eines drahtlosen Dienstes (604) in Übereinstimmung mit der Richtlinie von einem jeweiligen aus dem zumindest einen drahtlosen Server;
Empfangen einer Werbeanzeige (606) von dem jeweiligen aus dem zumindest einen drahtlosen Server; und
Präsentieren der Werbeanzeige (608) in Übereinstimmung mit der Richtlinie über zumindest eine Ausgabe der mobilen drahtlosen Vorrichtung.

15. Mobile drahtlose Vorrichtung gemäß Anspruch 14, wobei die mobile drahtlose Vorrichtung Dienste von einem bestimmten Netzwerkanbieter empfängt in Übereinstimmung mit einer Gruppendienstevereinbarung und wobei das Empfangen einer Werbeanzeige mit Bedingungen der Gruppendienstevereinbarung korreliert.

## Revendications

1. Procédé, mis en oeuvre par ordinateur, de gestion de l'utilisation de services sans fil par un groupe de dispositifs mobiles sans fil (102) partageant au moins un critère commun pour la fourniture de services sans fil d'au moins un fournisseur de réseau, le procédé comprenant les étapes consistant à :
surveiller l'usage de trafic de communication de services sans fil (502) par un groupe (110, 111) de dispositifs mobiles sans fil, afin de produire et de maintenir des informations (504) représentant une mesure quantitative de l'usage du trafic par le groupe ;
maintenir au moins une politique (404, 424) pour la gestion de l'utilisation, ladite au moins une politique comprenant des paramètres d'administration configurés pour déterminer s'il convient ou non de fournir une publicité à des dispositifs respectifs dans le groupe de dispositifs mobiles sans fil, en réponse à la mesure quantitative d'utilisation du trafic par le groupe ; et
fournir des publicités (532, 560) à au moins un dispositif dans le groupe de dispositifs mobiles sans fil, pour leur présentation conformément aux paramètres d'administration, afin d'obtenir ainsi un avantage qui finance l'utilisation des services sans fil par le groupe.

2. Procédé selon la revendication 1, comprenant l'étape consistant à produire un signal (528, 554) pour informer un fournisseur de l'avantage tiré de la fourniture de la publicité.

3. Procédé selon l'une quelconque des revendications 1 et 2, dans lequel ladite au moins une politique définit une pluralité de classes desdits dispositifs mobiles sans fil, afin de fournir différents niveaux de services sans fil à des groupes desdits dispositifs mobiles sans fil et dans lequel les paramètres d'administration fournissent des publicités en fonction des classes de services sans fil.

4. Procédé selon la revendication 3, comprenant en outre les étapes consistant à réviser périodiquement lesdites informations (540) et à attribuer automatiquement (542) un dispositif mobile sans fil particulier à une classe particulière dans ladite pluralité de classes, en réponse à la révision, afin de gérer ainsi ladite utilisation des services sans fil.

5. Procédé selon la revendication 4, comprenant en outre l'étape consistant à suspendre les services sans fil fournis à un dispositif mobile sans fil en réponse à ladite révision.

6. Procédé selon l'une quelconque des revendications 1 à 5, comprenant en outre l'étape consistant à fournir une interface utilisateur (402) afin de définir ladite au moins une politique et les paramètres d'administration pour des dispositifs mobiles sans fil particuliers.

7. Procédé selon l'une quelconque des revendications 1 à 6, dans lequel au moins certains des dispositifs du groupe de dispositifs mobiles sans fil partagent un plan de service de groupe d'un fournisseur de réseau et dans lequel la politique de publicité est corrélée au plan de service de groupe.

8. Procédé selon la revendication 7, dans lequel l'avantage est déterminé en fonction du plan de service de groupe.

9. Procédé selon l'une quelconque des revendications 1 à 8, comprenant en outre l'étape consistant à recevoir une demande de services sans fil (550) d'un dispositif particulier dans le groupe de dispositifs mobiles sans fil et dans lequel l'étape de fourniture de publicités comprend l'étape consistant à fournir les publicités à un autre dispositif du groupe, si bien que l'avantage est obtenu si la publicité est fournie pour une présentation à l'un quelconque des dispositifs du groupe.

10. Procédé selon l'une quelconque des revendications 1 à 9, dans lequel l'avantage consiste en une subvention pour l'utilisation des services d'un fournisseur de réseau particulier.

11. Procédé selon l'une quelconque des revendications 1 à 10, dans lequel la fourniture de publicités s'effectue en outre en réponse à des demandes respectives de services sans fil (522, 550).

12. Support lisible par ordinateur, qui stocke des instructions qui, lorsqu'elles sont exécutées par un ordinateur, commandent à l'ordinateur d'exécuter un procédé selon l'une quelconque des revendications précédentes.

13. Serveur sans fil (205), comprenant :
un routeur (224), destiné à communiquer avec une pluralité de clients mobiles sans fil ;
un processeur (222) et une mémoire stockant des instructions qui, lorsqu'elles sont exécutées par le processeur, commandent au processeur d'exécuter un procédé selon l'une quelconque des revendications 1 à 11.

14. Dispositif mobile sans fil, comprenant :
un contrôleur (322) et une mémoire (328) qui lui est couplée, ladite mémoire stockant des instructions destinées à configurer le contrôleur afin de :
recevoir au moins une politique (602) destinée à commander le fonctionnement du dispositif mobile sans fil avec au moins un serveur sans fil qui gère le fonctionnement d'un groupe de dispositifs mobiles sans fil qui partage au moins un critère commun pour la fourniture de services sans fil d'au moins un fournisseur de réseau, ledit serveur surveillant l'utilisation du trafic de communication de services sans fil par le groupe de dispositifs mobiles sans fil afin de fournir des publicités en réponse à ladite surveillance, produisant une mesure quantitative de l'utilisation du trafic par le groupe, ladite au moins une politique comprenant des données de configuration afin de présenter des publicités en réponse à la mesure quantitative de l'utilisation du trafic par le groupe et en réponse à au moins certaines demandes de services sans fil adressées audit au moins un serveur sans fil ;
demander un service sans fil (604) en accord avec la politique à un serveur respectif dudit au moins un serveur sans fil ;
recevoir une publicité (606) du serveur respectif dudit au moins un serveur sans fil ; et
présenter la publicité (608) en accord avec la politique, via au moins une sortie du dispositif mobile sans fil.

15. Dispositif mobile sans fil selon la revendication 14, dans lequel le dispositif mobile sans fil reçoit des services d'un fournisseur de réseau particulier en accord avec un plan de service de groupe et dans lequel la réception d'une publicité est corrélée aux conditions du plan de service de groupe.
